(19) Europäisches Patentamt / European Patent Office / Office européen des brevets

(11) **EP 2 652 899 B1**

(12) **FASCICULE DE BREVET EUROPEEN**

(45) Date de publication et mention
de la délivrance du brevet:
**23.05.2018 Bulletin 2018/21**

(21) Numéro de dépôt: **11817383.0**

(22) Date de dépôt: **16.12.2011**

(51) Int Cl.:
***H04L 9/08*** *(2006.01)*

(86) Numéro de dépôt international:
**PCT/FR2011/053040**

(87) Numéro de publication internationale:
**WO 2012/080683 (21.06.2012 Gazette 2012/25)**

(54) **PROCÉDÉ ET SYSTÈME D'ACCÈS CONDITIONNEL À UN CONTENU NUMÉRIQUE, TERMINAL ET DISPOSITIF D'ABONNÉ ASSOCIÉS**

VERFAHREN UND SYSTEM FÜR BEDINGTEN ZUGANG ZU DIGITALEM INHALT, ENTSPRECHENDES ENDGERÄT UND TEILNEHMERVORRICHTUNG

METHOD AND SYSTEM FOR CONDITIONAL ACCESS TO A DIGITAL CONTENT, ASSOCIATED TERMINAL AND SUBSCRIBER DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.12.2010 FR 1060770**

(43) Date de publication de la demande:
**23.10.2013 Bulletin 2013/43**

(73) Titulaire: **Cryptoexperts SAS
75020 Paris (FR)**

(72) Inventeurs:
- **DELERABLEE, Cécile
  F-75017 Paris (FR)**
- **GOUGET, Aline
  F-75016 Paris (FR)**
- **PAILLIER, Pascal
  F-75020 Paris (FR)**

(74) Mandataire: **Brun, Philippe Alexandre Georges
MED'iNVENT CONSULTING
Espace Mistral - Bât.A
297 avenue du Mistral
ZI ATHELIA IV
13705 La Ciotat Cedex (FR)**

(56) Documents cités:
EP-A1- 1 662 789    EP-A1- 2 207 340
WO-A1-2008/023023    WO-A2-2009/112966
US-A1- 2008 298 582

## Description

L'invention concerne un système et un procédé d'accès conditionnel à un contenu numérique permettant de prévenir la mise en oeuvre d'un dispositif électronique licitement acquis et intègre, au moyen d'un terminal pirate. L'invention permet ainsi de lutter efficacement contre la mise à disposition frauduleuse de contenus multimédias protégés.

L'invention concerne en outre l'adaptation de tels dispositifs ainsi qu'un procédé pour déclencher respectivement la révocation temporaire ou permanente d'un dispositif électronique ou la réhabilitation éventuelle de ce dernier. L'invention concerne en outre l'adaptation d'un terminal pour permettre la mise en oeuvre du procédé d'accès conditionnel.

Un opérateur de diffusion de contenus numériques opère généralement un système d'accès conditionnel (*Conditional Access System* - CAS en langue anglaise) pour mettre un contenu protégé à la disposition d'un abonné ou d'une pluralité d'abonnés. Un tel système s'appuie généralement sur des dispositifs électroniques sécurisés, tels que des cartes à puce, pour héberger les identités et/ou les droits des abonnés et pour réaliser des opérations de chiffrement, de déchiffrement ou de génération de nombres.

Selon les systèmes d'accès conditionnel connus, pour diffuser un contenu multimédia protégé, des mots de contrôle chiffrés $c$ et des contenus encodés $C$ sont transmis au travers d'un réseau de diffusion, à intervalles réguliers ou crypto-périodes, pour le moins, connus et maîtrisés par l'opérateur de diffusion. Un mot de contrôle chiffré est obtenu généralement au moyen d'une fonction de chiffrement $E$ telle que $c = E(k)$, $k$ étant la valeur dudit mot de contrôle. Un contenu encodé $C$ est quant à lui obtenu au moyen d'une fonction de codage *enc* et dudit mot de contrôle $k$, tel que $C = enc(k,M)$, $M$ étant le contenu multimédia en clair. A titre d'exemple, la fonction d'encodage peut être conforme au standard DVB-CSA (*Digital Video Broadcasting - Common Scrambling Algorithm,* en langue anglaise). Pour pouvoir visualiser ou écouter un contenu protégé, toute personne doit souscrire un abonnement. Un abonné perçoit un dispositif dédié, généralement sous la forme d'une carte à puce, qui couplé à un terminal, généralement appelé décodeur ou « set-top box », permet audit abonné de décoder un contenu protégé. Les mots de contrôles chiffrés $c$ sont classiquement déchiffrés par un dispositif d'abonné qui délivre les mots de contrôle $k$ au terminal. Ce dernier est en charge de réaliser le décodage d'un contenu encodé $C$ et permet, au moyen d'une interface Homme-Machine adaptée - par exemple un téléviseur de salon, d'accéder au contenu clair $M$.

Il est usuel que des entités « pirates » tentent de développer un commerce illicite visant à émettre, sur un réseau pirate, des mots de contrôle déchiffrés $k$ permettant de décoder un contenu protégé $C$ à l'aide d'un terminal adapté à cet effet. Les premières menaces et attaques ont poussé les pirates à tenter de « casser » la sécurité des dispositifs électroniques d'abonné. Par la connaissance du matériel cryptographique, des algorithmes ou de secrets, un pirate peut alors « cloner » ou émuler un tel dispositif et mettre certaines « reproductions » à la disposition d'abonnés indélicats.

La robustesse croissante et quasi inviolable de tels dispositifs ont conduit les pirates à acquérir licitement des dispositifs d'abonné (tels que des cartes à puce) et à concevoir des terminaux pirates, aptes à coopérer avec lesdits dispositifs et à émettre les mots de contrôles déchiffrés $k$, en temps réel, sur un réseau ou canal pirate selon des techniques connues sous le vocable de *« Control-word sharing »* suivant une terminologie anglo-saxonne. Cette technique de « *Control-word sharing* » visant à émettre des mots de contrôle déchiffrés est particulièrement prisée car elle permet d'utiliser un réseau pirate de faible bande passante car la taille des mots de contrôle est généralement bien inférieure à la taille de contenus décodés.

Pour contrer les pirates, les opérateurs parviennent généralement à connaître l'existence d'un tel réseau pirate. En souscrivant un abonnement auprès d'un pirate, un opérateur peut même disposer d'un dispositif « clone » ou émulé et l'étudier.

Il est connu de l'état de la technique des procédés de traçage des traîtres tels que celui divulgué dans US2008/0298582.

Toutefois, étant donné que le mot de contrôle $k$ qui permet d'accéder au contenu multimédia en clair, est identique pour tous les abonnés (ou pour un grand groupe d'abonnés), il n'est pas possible d'identifier l'origine de la fraude à partir d'un mot de contrôle ayant été divulgué sur le réseau pirate. Il n'existe donc pas de procédés connus permettant, d'identifier un dispositif, bien que régulièrement acquis et intègre, qui est frauduleusement exploité.

L'invention permet de répondre de manière particulièrement efficace à la menace du « *Control-word sharing* ». Parmi les nombreux avantages apportés par l'invention, nous pouvons mentionner que l'invention permet de tracer, à distance, tout dispositif d'abonné ayant permis de produire un mot de contrôle dont la valeur peut être transmise sur un réseau pirate. En effet, l'invention permet de prévoir un mot de contrôle dédié et distinct pour chaque dispositif d'abonné. L'observation d'un tel mot de contrôle émis sur un réseau pirate, permet de retrouver le dispositif d'abonné exploité illicitement. L'invention permet en outre de révoquer à distance un tel dispositif, dit « dispositif traître », tout en poursuivant la diffusion d'un contenu au travers du réseau de diffusion. L'invention offre ainsi, à tout opérateur de diffusion de contenus, un outil particulièrement simple et efficace pour lutter contre le piratage. En outre, selon un mode de réalisation préféré, un dispositif d'abonné n'opère que peu de calculs, les calculs coûteux étant effectués dans le terminal mis à disposition de l'abonné et coopérant avec ledit dispositif d'abonné.

A cette fin, il est prévu un procédé pour produire un mot de contrôle, mis en oeuvre par des moyens de traitement d'un dispositif électronique d'abonné coopérant avec un terminal, ledit dispositif comportant des moyens de réception pour recevoir des données depuis le terminal et des moyens pour délivrer ledit mot de contrôle produit audit terminal. Ledit procédé comporte :

- une étape pour recevoir des données via les moyens de réception qui consistent en une balise $t$ ;
- une étape pour déterminer la crypto-période courante en exploitant la balise $t$ reçue ;
- une étape pour produire un mot de contrôle à partir de ladite crypto-période courante $cp$ et d'un secret $SK_i$ mémorisé par le dispositif ;
- une étape pour délivrer un mot de contrôle $k'$ via les moyens pour délivrer du dispositif.

Pour pouvoir tracer tout dispositif d'abonné ayant produit un mot de contrôle dont la valeur peut être transmise sur un réseau pirate, l'étape pour produire le mot de contrôle d'un tel procédé consiste à élaborer un mot de contrôle $k_{i,cp}$ traçable dont la valeur est distincte de celle d'un mot de contrôle produit, pour la crypto-période courante $cp$, par tout autre dispositif d'abonné en intégrant la valeur d'un identificateur $i$ dans le calcul du mot $k_{i,cp}$. Ladite valeur de l'identificateur $i$ est mémorisé par le dispositif et distincte de celle mémorisée par tout autre dispositif d'abonné. L'étape pour délivrer le mot de contrôle consiste à délivrer $k'$ égal à $k_{i,cp}$.

Pour pouvoir révoquer ou habiliter un dispositif d'abonné mettant en oeuvre un tel procédé, ce dernier peut comporter une étape préalable pour autoriser le dispositif à délivrer un mot de contrôle $k'$ égal au mot de contrôle produit $k_{i,cp}$.

Eventuellement pour décharger de cette tâche un serveur de contenu, un tel procédé peut comporter une étape pour calculer et délivrer un entête $H$ pour permettre *in fine* le décodage du contenu encodé par un terminal.

Pour mettre en oeuvre un procédé pour produire un mot de contrôle traçable, l'invention prévoit d'adapter un dispositif électronique d'abonné coopérant avec un terminal et comportant :

- des moyens de réception pour recevoir des données depuis le terminal ;
- des moyens de traitement pour produire un mot de contrôle à partir desdites données ;
- des moyens pour délivrer ledit mot de contrôle audit terminal.

Une telle adaptation consiste en ce que le dispositif comporte des moyens de mémorisation pour mémoriser un identificateur $i$, un secret $SK_i$. Les moyens de traitement et de mémorisation sont en outre adaptés pour produire et délivrer un mot de contrôle traçable $k'$ selon un procédé conforme à l'invention.

Selon un deuxième objet, l'invention prévoit un procédé pour décoder un contenu encodé $C$ et produire un contenu clair $M$, ledit procédé étant mis en oeuvre par des moyens de traitement d'un terminal coopérant avec des moyens pour recevoir des données depuis le monde extérieur et des moyens pour délivrer ledit contenu clair $M$. Selon l'invention lesdites données consistent en ledit contenu encodé $C$, un entête $H$ et un mot de contrôle traçable $k_{i,cp}$ élaboré et délivré par un dispositif électronique d'abonné conforme à l'invention. Pour permettre le décodage d'un contenu, quand bien même le mot de contrôle soit traçable et donc distinct d'un dispositif d'abonné à un autre, le procédé pour décoder comporte :

- une étape pour appliquer une première fonction $F1$ à l'entête $H$ et au mot de contrôle $k_{i,cp}$ pour produire un mot $K$ indépendant de l'identificateur $i$ du dispositif ayant produit et délivré le mot de contrôle $k_{i,cp}$ en supprimant la contribution dudit identificateur dédié $i$ ;
- une étape pour appliquer une deuxième fonction $F3$ audit mot $K$ et au contenu encodé $C$ pour produire le contenu clair $M$ ;
- une étape pour délivrer ledit contenu clair $M$ via les moyens pour délivrer du terminal.

Pour mettre en oeuvre un procédé pour décoder un contenu encodé $C$ et produire un contenu clair $M$, l'invention prévoit d'adapter un terminal électronique comportant :

- des moyens de réception pour recevoir des données depuis le monde extérieur ;
- des moyens de traitement pour produire un contenu clair $M$ à partir desdites données ;
- des moyens pour délivrer ledit contenu clair à une interface homme-machine adaptée pour restituer ledit contenu clair ;
- des moyens pour coopérer avec un dispositif électronique d'abonné conforme à l'invention.

Les données reçues du mode extérieur consistent dès lors en un contenu encodé $C$, un entête $H$ et une balise *t.* Les moyens pour coopérer avec ledit dispositif électronique d'abonné transmettent à ce dernier ladite balise *t* et réceptionnent en retour un mot de contrôle traçable $k_{i,cp}$ élaboré et délivré selon l'invention. Le terminal comporte en outre des moyens de traitement adaptés pour décoder et délivrer un contenu clair *M* selon un procédé conforme à l'invention.

Selon un troisième objet, l'invention prévoit un procédé pour encoder un contenu clair *M* et produire un contenu encodé *C,* ledit procédé étant mis en oeuvre par des moyens de traitement d'un serveur comportant des moyens pour délivrer ledit contenu encodé *C* à un terminal selon l'invention et coopérant avec un dispositif d'abonné également conforme à l'invention. Un tel procédé comporte :

- une étape pour produire un contenu encodé *C* à partir d'une crypto-période *cp* et d'un secret *MK* connu du serveur ;
- une étape pour produire une balise *t* pour caractériser la crypto-période *cp* à partir de laquelle le contenu encodé *C* a été produit et permettre au dispositif de produire et délivrer un mot de contrôle traçable selon l'invention ;
- une étape pour calculer et délivrer un entête *H* pour permettre le décodage du contenu encodé par le terminal selon l'invention ;
- une étape pour délivrer conjointement ledit contenu encodé *C,* l'entête *H* et ladite balise *t.*

Pour mettre en oeuvre un tel procédé, l'invention prévoit d'adapter les moyens de traitement d'un serveur pour que ceux-ci mettent en oeuvre ledit procédé pour produire et délivrer un contenu encodé *C* à partir d'un contenu clair, d'une crypto-période *cp* et d'un secret *MK,* une balise *t* et un entête *H.*

L'invention prévoit un système d'accès conditionnel à un contenu numérique comportant un serveur, un terminal et un dispositif électronique respectivement conformes à l'invention.

Celle-ci concerne en outre un procédé d'accès conditionnel à un contenu numérique comportant :

- une étape pour élaborer et délivrer par un serveur un contenu encodé *C,* une balise *t* et un entête *H* conformément à l'invention ;
- une étape pour réceptionner par un terminal lesdits contenu encodé *C,* balise *t* et l'entête *H* ;
- une étape pour transmettre la balise *t* par le terminal à un dispositif coopérant avec ledit terminal ;
- une étape pour produire et délivrer par ledit dispositif au terminal un mot de contrôle traçable $k_{i,cp}$ conformément à l'invention ;
- une étape pour décoder par le terminal le contenu encodé *C* et produire un contenu clair *M* selon l'invention ;
- une étape pour restituer ledit contenu clair *M* au moyen d'une interface adaptée audit contenu clair.

Pour observer un réseau pirate et identifier un dispositif électronique frauduleusement exploité, l'invention prévoit un procédé pour tracer un mot de contrôle $k_{p,cp}$ produit par un dispositif d'abonné traître mettant en oeuvre un procédé pour produire un mot de contrôle traçable selon l'invention. Un tel procédé pour tracer comporte :

- une étape pour collecter le mot de contrôle $k_{p,cp}$ ;
- une étape pour collecter un utilitaire ou programme de déchiffrement pirate apte à décoder un contenu encodé à l'aide dudit mot de contrôle $k_{p,cp}$ ;

- une étape pour déterminer un identifiant *i* = *p* d'un dispositif ayant produit $k_{p,cp}$ consistant à :

    i. interpréter l'utilitaire ou programme de déchiffrement pour concevoir un programme équivalent exprimant un ensemble d'instructions sous la forme d'opérations algébriques et annexes comportant chacune au moins une variable d'entrée et au moins une variable de sortie ;
    ii. fixer les variables d'entrée à des constantes pour lesquelles le programme équivalent décode le contenu encodé correctement ;
    iii. simplifier ledit programme équivalent pour que celui-ci ne comporte qu'une séquence d'instructions sans saut ;
    iv. convertir le programme équivalent simplifié en un système d'équations multivariées par la mise en oeuvre de transformations algébriques ;
    v. inverser tout ou partie ledit système d'équations multivariées pour identifier le dispositif traître.

D'autres caractéristiques et avantages apparaîtront plus clairement à la lecture de la description qui suit et à l'examen des figures qui l'accompagnent parmi lesquelles :

- la figure 1 présente un système d'accès conditionnel selon l'état de la technique ;
- la figure 2 présente un mode de piratage de contenus multimédia protégés et diffusés au moyen système d'accès conditionnel selon l'état de la technique ;

- les figures 3 et 3a décrivent respectivement deux modes de réalisation d'un système d'accès conditionnel conforme à l'invention ;
- la figure 4 décrit la mise en oeuvre, selon l'invention, d'un procédé pour observer un réseau pirate et identifier un dispositif électronique frauduleusement exploité ou dispositif traître ;
- la figure 5 illustre l'architecture fonctionnelle d'un dispositif électronique d'abonné conforme à l'invention ;
- les figures 5a et 5b illustrent respectivement deux modes de réalisation d'un procédé pour produire un mot de contrôle conformément à l'invention ;
- la figure 6 décrit un premier mode de réalisation préféré d'un procédé pour décoder un contenu encodé, conformément à l'invention ;
- la figure 7 décrit un premier mode de réalisation préféré d'un procédé pour encoder un contenu clair, conformément à l'invention ;
- la figure 8 décrit un premier mode de réalisation préféré d'un procédé pour générer un secret pour mettre en oeuvre un système d'accès conditionnel, conformément à l'invention ;
- la figure 9 décrit un mode de réalisation d'un procédé d'accès conditionnel conforme à l'invention.

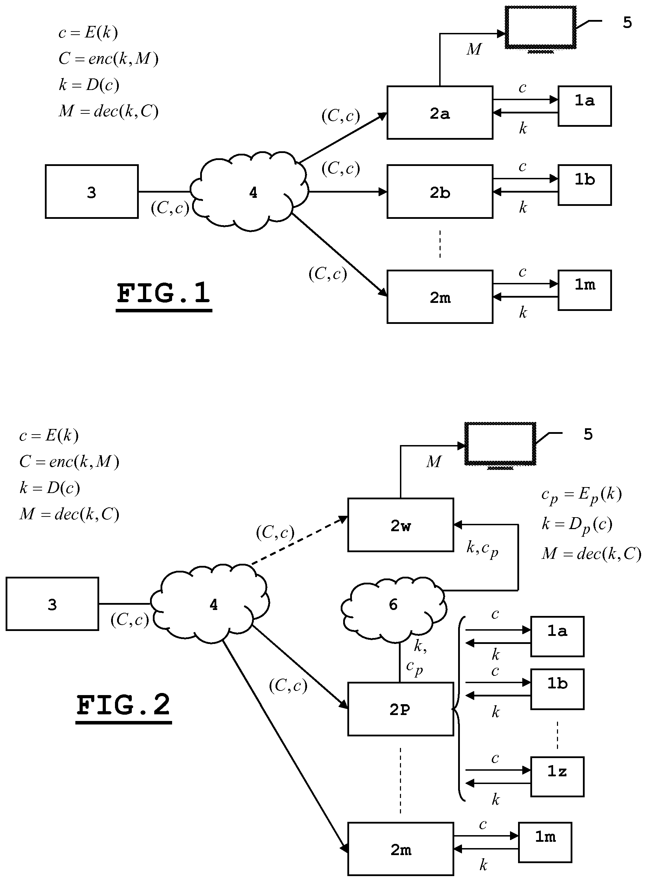

La figure 1 permet de présenter un système d'accès conditionnel à un contenu numérique selon l'état de la technique. Il consiste en un réseau de diffusion 4 mis en oeuvre par un opérateur de diffusion de contenus protégés. Ainsi, depuis un serveur de contenus 3, sont émis conjointement des mots de contrôle $c$ et des contenus $C$ respectivement chiffrés et encodés. Le serveur 3 encode pour cela un contenu clair $M$ au moyen d'une fonction d'encodage $enc$ et d'un mot de contrôle $k$, ce dernier étant produit par ledit serveur 3. On obtient ainsi un contenu encodé $C$ tel que $C = enc(k,M)$. Un chiffré $c$ du mot de contrôle $k$ est également émis ou « broadcasté » conjointement avec le contenu encodé $C$. Pour cela, le serveur chiffre au moyen d'une fonction de chiffrement $E$ ledit mot de contrôle $k$ pour obtenir $c$ tel que $c = E(k)$.

Les mots de contrôle chiffrés $c$ et les contenus chiffrés $C$ sont transmis, via le réseau de diffusion 4, à des terminaux 2a à 2m. Ces derniers ont la charge respectivement de décoder en temps réel les contenus encodés $C$ émis par le serveur 3. Ainsi un terminal - tel que par exemple le décodeur 2a - met en oeuvre une fonction de décodage $dec$ et l'applique au contenu encodé $C$ pour obtenir le contenu clair $M$. Ce dernier peut être visualisé en utilisant un téléviseur de salon 5 ou toute autre interface adaptée pour restituer le contenu clair. Pour appliquer la fonction de décodage $dec$, un terminal doit connaître la valeur du mot de contrôle $k$ qui a été utilisé par le serveur 3 pour encoder le contenu $M$. Selon l'état de l'art et conformément à la figure 1, un terminal 2a à 2m reçoit un mot de contrôle chiffré $c$ tel que $c = E(k)$ et le transmet à un dispositif électronique sécurisé 1a à 1m, généralement dédié à un abonné. Le terminal 2a reçoit, au travers du réseau 4, régulièrement des couples $(C,c)$ et transmet à un dispositif 1a les mots de contrôles chiffrés $c$. Le dispositif 1a peut déchiffrer un mot de contrôle chiffré $c$ au moyen d'une fonction de déchiffrement $D$ pour obtenir le mot de contrôle $k$ ayant servi à encoder un contenu $M$. Ainsi $k = D(c)$. Il en est de même pour tout autre terminal, tel que 2b à 2m, chacun coopérant respectivement avec un dispositif 1b à 1m. Selon une variante de réalisation, le serveur 3 peut utiliser un secret, par exemple sous la forme d'une clé $Kc$ pour chiffrer un mot de contrôle $k$. Ainsi $c = E(Kc,k)$. Dans ce cas, un dispositif, tel que le dispositif 1a à 1m, met en oeuvre une fonction réciproque de déchiffrement $D$, telle que $k = D(Kd,k)$ où $Kd$ est une clé de déchiffrement connue par le dispositif. Selon les fonctions de chiffrement $E$ et de déchiffrement $D$, les clés $Kc$ et $Kd$ peuvent être identiques. C'est le cas d'un chiffrement / déchiffrement symétrique. En variante, selon un schéma dit de « *broadcast encryption* », $Kc$ est une clé publique ou secrète dédiée à l'opérateur et $Kd$ est une clé secrète dédiée au dispositif et connue de l'opérateur. Selon cette variante, il existe ainsi plusieurs clés individuelles de déchiffrement et chacun des dispositifs licitement émis et remis aux abonnés dudit opérateur dispose d'une telle clé de déchiffrement individuelle.

La figure 2 permet d'illustrer un scénario pour lequel une organisation pirate, que nous nommerons « pirate » parvient à réaliser un commerce frauduleux de contenus protégés.

Selon ce premier scénario, le pirate a contracté tout à fait normalement un abonnement auprès d'un opérateur de contenus. Il peut ainsi disposer d'un dispositif électronique d'abonné, tel qu'une carte à puce 1a. Le pirate est en outre en possession d'un terminal 2P, dit terminal pirate. Ce terminal peut recevoir des couples $(C,c)$ depuis un réseau de diffusion 4 tel que celui décrit en liaison avec la figure 1. Le terminal 2P peut coopérer avec ledit dispositif 1a pour lui transmettre les mots de contrôles chiffrés $c$. En retour, le dispositif 1a produit le mot de contrôle $k$ en déchiffrant le chiffré $c$ au moyen d'une fonction de déchiffrement $D$. Tout à fait normalement, le dispositif 1a délivre au terminal 2P le mot de contrôle $k$. Suivant ce premier scénario, le terminal pirate 2P peut alors émettre au travers d'un réseau pirate 6 les mots de contrôle $k$ en temps réels. Un utilisateur indélicat ayant « souscrit » un abonnement auprès du pirate, peut disposer d'un terminal 2w. Ce dernier est adapté pour qu'il reçoive d'une part, depuis le réseau de distribution 4, des contenus encodés $C$ (flèche en pointillés) et d'autre part, depuis le réseau pirate 6, les mots de contrôle $k$ associés, en clair. Le terminal 2w peut réaliser le décodage des contenus encodés $C$ et délivrer les contenus clairs $M$ pour qu'ils puissent être restitués.

Un pirate peut également souscrire une pluralité d'abonnements auprès d'un ou plusieurs opérateurs. Un terminal pirate 2P peut alors coopérer simultanément avec une pluralité de dispositifs d'abonnés 1a à 1z et mettre en oeuvre un algorithme de gestion desdits dispositifs plus ou moins complexe. Par exemple, le terminal pirate transmet un mot de contrôle $k$ déchiffré majoritairement par les dispositifs 1a à 1z. En variante, un tel terminal 2P peut solliciter aléatoirement tel ou tel dispositif électronique etc.

Un pirate peut en variante éventuellement chiffrer ou encoder, selon un procédé propriétaire, les mots de contrôle $k$ émis sur un réseau pirate. Ainsi, peut être transmis, sur ledit réseau pirate, un chiffré $c_p = E_p(k)$ - $E_p$ étant une fonction de chiffrement propriétaire du pirate. Un terminal 2w comporte, dans ce cas, des fonctions de déchiffrement $D_p$ réciproques pour délivrer *in fine* les clairs attendus.

L'invention permet de mettre en échec ces différents scenari de piratage.

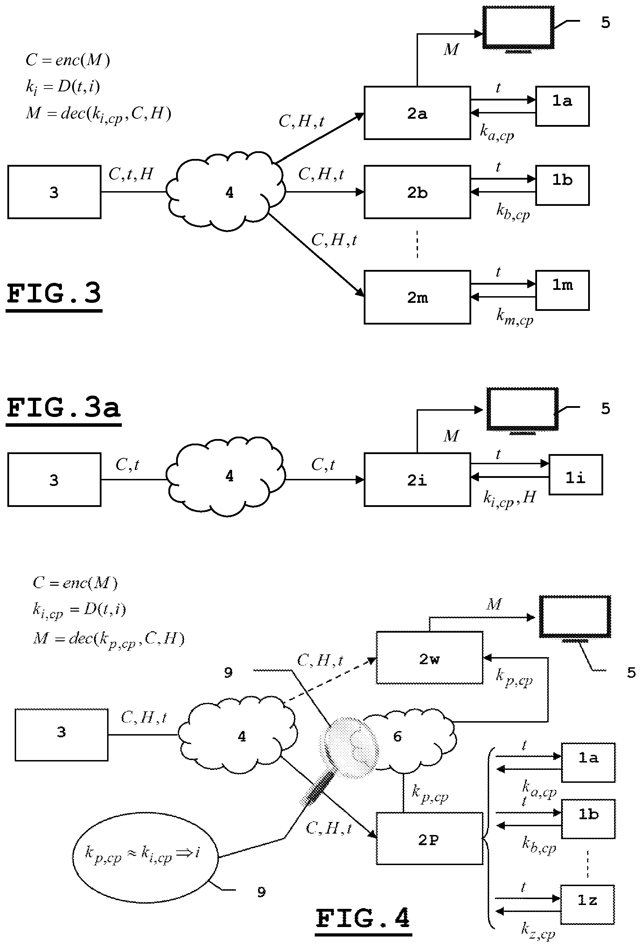

La figure 3 permet d'illustrer un premier mode de réalisation d'un système d'accès conditionnel à un contenu numérique tel que le prévoit l'invention. Comme pour un système connu, l'invention prévoit un réseau de diffusion 4 mis en oeuvre par un opérateur de diffusion de contenus protégés. Depuis un serveur de contenus 3, sont émis des contenus encodés $C$. Pour cela, le serveur 3 encode un contenu clair $M$ au moyen d'une fonction d'encodage *enc.* On obtient ainsi un contenu encodé $C$ tel que $C = enc(M)$. Une balise $t$ est également émise ou « broadcastée » conjointement avec le contenu encodé $C$. Cette balise contient des données relatives notamment à la crypto-période courante. Elle peut en outre contenir des données concernant le contenu ou des directives que le serveur souhaite émettre sur le réseau 4 à destination d'un ou plusieurs dispositifs d'abonnés 1a à 1m coopérant respectivement avec des terminaux 2a à 2m aptes à recevoir les éléments diffusés via le réseau 4. Selon ce premier mode de réalisation, un entête $H$ est également et conjointement diffusé avec le contenu encodé $C$ et la balise $t$. Cet entête sera quant à lui principalement exploité par tout terminal pour décoder un contenu encodé.

Les décodeurs 2a à 2m ont la charge respectivement de décoder en temps réel les contenus encodés $C$ émis par le serveur 3. Ainsi un terminal - tel que par exemple le décodeur 2a - met en oeuvre une fonction de décodage *dec* et l'applique au contenu encodé $C$ pour obtenir le contenu clair $M$. Ce dernier peut être visualisé en utilisant un téléviseur de salon 5 ou toute autre interface adaptée pour restituer le contenu clair. Pour appliquer la fonction de décodage *dec,* un terminal doit connaître la valeur de l'entête $H$ ainsi que la valeur d'un mot de contrôle $k_{a,cp}$ produit et délivré par le dispositif électronique sécurisé d'abonné 1a coopérant avec le terminal 2a. Il en est de même pour tout autre terminal, tel que les terminaux 2b à 2m, chacun coopérant respectivement avec les dispositifs 1b à 1m. Les mots de contrôle $k_{i,cp}$ délivrés par un dispositif d'abonné 1i sont produits à l'aide des balises $t$ transmises depuis le serveur 3 via les terminaux, d'un identificateur $i$ dédié dispositif d'abonné 1i et d'un secret $SK_i$, $i$ et $SK_i$ étant mémorisés dans le dispositif d'abonné 1i. Chaque mot de contrôle est ainsi propre à un dispositif d'abonné particulier. Ainsi $k_{i,cp}$ est propre et dédié au dispositif 1i. Ce mot de contrôle $k_{i,cp}$ est en outre différent des autres mots de contrôle respectivement dédiés aux autres dispositifs d'abonné. Pour décoder un contenu encodé $C,$ un terminal 2i met ainsi en oeuvre une fonction de décodage *dec* telle que $M = dec(k_{i,cp},C,H)$, $M$ étant le contenu clair.

Selon une variante de réalisation illustrée en liaison avec la figure 3a, un serveur 3 peut ne transmettre, au travers du réseau 4, que le contenu encodé $C$ et la balise $t$ caractérisant la crypto-période courante $cp$ à destination de terminaux dont le terminal 2i. Dans ce cas, l'élaboration de l'entête $H$ nécessaire au décodage est réalisée par le dispositif d'abonné 1i coopérant avec le terminal 2i - d'une manière similaire à celle effectuée par le serveur 3 décrit en liaison avec la figure 3. Cette variante permet de réduire la bande passante nécessaire au *broadcast* des contenus encodés.

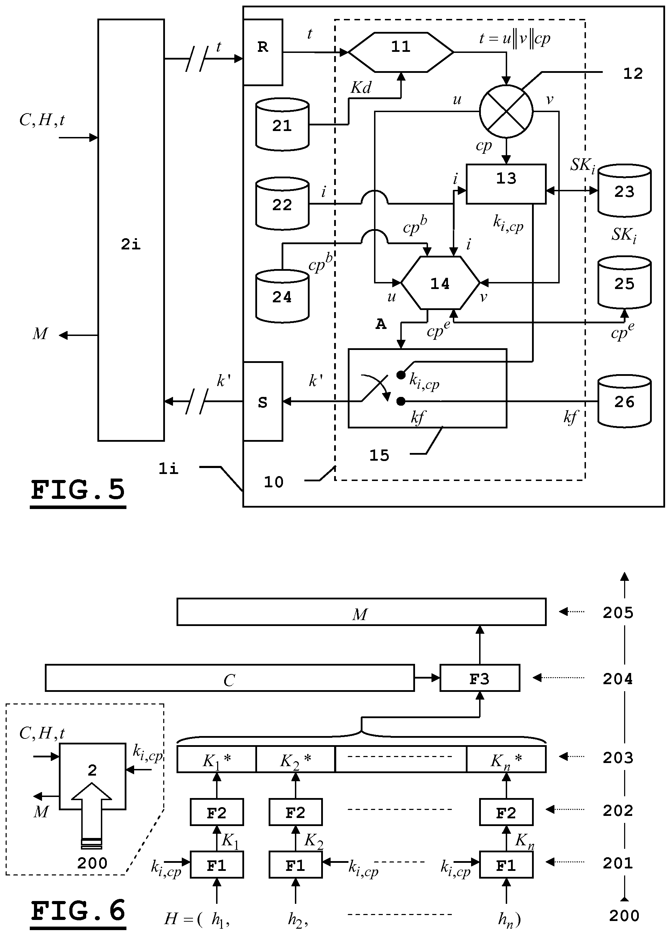

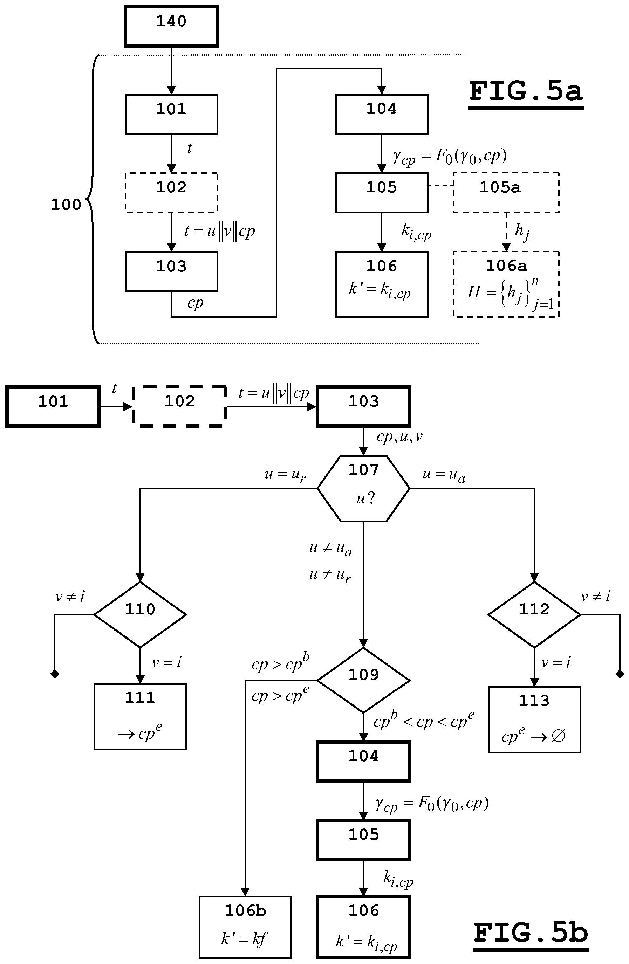

Quel que soit le mode de réalisation (décrit en liaison avec les figures 3 ou 3a) l'invention permet de mettre en oeuvre un système d'accès conditionnel qui prévient le risque du « *control-word sharing* ». En effet, les mots de contrôles utilisés par les décodeurs pour décoder les contenus encodés, sont traçables. Ils dépendent en effet chacun et respectivement d'un identificateur dédié au dispositif d'abonné qui les a générés et délivrés. Chaque mot de contrôle ainsi produit est propre et dédié à un dispositif d'abonné. Pour deux dispositifs d'abonnés 1i et 1j, deux mots de contrôle $k_{i,cp}$ et $k_{j,cp}$ sont produits respectivement par les dispositifs 1i et 1j tels que $k_{i,cp} \neq k_{j,cp}$. La figure 4 permet d'illustrer une technique permettant à un opérateur de détecter l'utilisation frauduleuse d'un dispositif d'abonné que nous nommerons « dispositif traître ». La figure 4 reprend les éléments décrits en liaison avec la figure 3. Ainsi un terminal pirate 2P reçoit des triplets ($C,H,t$) depuis un réseau de diffusion 4. Le terminal 2P coopère avec un ou plusieurs dispositifs 1a à 1z acquis licitement et conformes à l'invention. Ils produisent et délivrent des mots de contrôle qui dépendent notamment et respectivement de l'identificateur de chaque dispositif d'abonné. Ainsi un dispositif 1a délivre un mot de contrôle $k_{a,cp}$ qui dépend notamment de son identificateur dédié $a$. Nous étudierons plus loin un procédé pour élaborer un tel mot de contrôle (en liaison avec les figures 5a et 5b). Pour illustrer le processus d'observation, considérons qu'il est possible pour un opérateur en possession d'un mot de contrôle $k_{i,cp}$ de déduire l'identificateur $i$ du dispositif ayant produit ledit mot de contrôle $k_{i,cp}$.

Le terminal 2P ayant réceptionné les mots de contrôle $k_{a,cp}$, $k_{b,cp}$ ou $k_{z,cp}$, respectivement produits par les dispositifs 2a, 2b, 2z, peut émettre en temps réels, au travers d'un réseau pirate 6, un ou plusieurs mots de contrôle - que nous noterons $k_{p,cp}$ - égal à l'un des mots $k_{a,cp}$, $k_{b,cp}$ ou $k_{z,cp}$. Un terminal 2w peut recevoir d'une part, depuis le réseau de distribution 4, des contenus encodés $C$ (accompagnés du header $H$ et la balise $t$) et d'autre part, depuis le réseau pirate 6, des mots de contrôle $k_{p,cp}$ en clair. Le terminal 2w peut réaliser le décodage des contenus encodés $C$ et délivrer les contenus clairs $M$ pour qu'ils puissent être visualisés. Un opérateur peut disposer de moyens 9 pour observer le réseau pirate 6. Cette observation peut consister à percevoir un ou plusieurs mots de contrôle $k_{p,cp}$ qui transitent via le réseau pirate 6. En se basant sur cette observation, un opérateur parvient à identifier au moins un dispositif traître utilisé par un décodeur ou terminal pirate 2P, parmi les dispositifs 1a à 1z.

Dès qu'un dispositif traître 1i est identifié, celui-ci peut être révoqué en transmettant une requête de révocation telle que prévue par l'invention (figure 5b) voire prendre toutes mesures qu'il jugera utile pour stopper l'utilisation du dispositif traître.

Pour tenter de compliquer la tâche de l'opérateur cherchant à tracer un dispositif traître, le mot de contrôle peut, en variante, résulter d'un mélange basé sur l'un desdits mots de contrôle $k_{a,cp}$, $k_{b,cp}$ ou $k_{z,cp}$ afin de produire et émettre un $k_{p,cp}$ distinct desdits $k_{a,cp}$, $k_{b,cp}$ ou $k_{z,cp}$. Toutefois, l'invention prévoit un mode de réalisation pour prévenir l'usage de telles combinaisons ou mélanges afin de garantir la traçabilité des dispositifs d'abonnés.

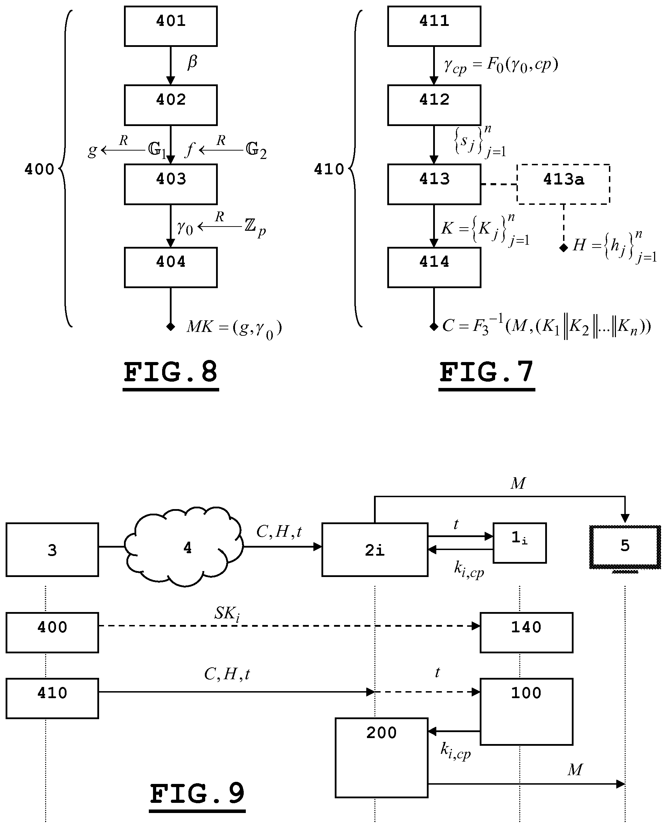

Comme l'indique la figure 9, et en liaison avec la variante décrite en figure 3, pour mettre en oeuvre l'invention, un contenu clair M est encodé par un serveur de contenus 3 à l'aide d'une fonction *enc* telle que décrite, par exemple, en liaison avec la figure 7 selon un procédé 410. Ce dernier permet en outre d'élaborer une balise t qui caractérise notamment la crypto-période courante cp. Un entête H est en outre élaboré par ledit serveur 3 (voire par les dispositifs d'abonnés selon la variante de la figure 3a). Les triplets (C,H,t) - ou les couples (C,t) selon la figure 3a - sont transmis du serveur 3 via le réseau 4 à un au moins terminal 2i qui transmet à son tour à un dispositif d'abonné 1i - avec lequel il coopère - ladite balise t. Selon un procédé 100 tel que décrit en liaison avec la figure 5a, le dispositif 1i - adapté comme l'indique la figure 5 - produit et délivre un mot de contrôle propre $k_{i,cp}$ audit terminal 2i. Ce dernier décode le contenu encodé C selon une fonction de décodage *dec* conforme à un procédé tel que le procédé 200 décrit à titre d'exemple par la figure 6. Le contenu clair M ainsi obtenu peut être délivré par une interface homme-machine 5. Préalablement, un tel procédé d'accès conditionnel conforme à l'invention, comporte une étape pour définir et distribuer à un groupe de dispositifs d'abonnés un secret $SK_i$ dédié. Selon un mode de réalisation particulier, les secrets $SK_i$ ont une valeur commune et identique à celle d'un secret MK partagé avec le serveur. Pour initialiser un tel secret commun, l'invention prévoit un procédé, tel que l'exemple 400 décrit en liaison avec la figure 8.

L'invention prévoit en outre qu'une pluralité de dispositifs d'abonné puisse partager un même identificateur i. Une telle pluralité de dispositifs s'apparente dès lors à un ensemble de « clones » partageant un même identificateur i voire un même $SK_i$. Par mesure de simplification et au sens de l'invention, la notion de « dispositif d'abonné » couvre sans distinction aucune un dispositif d'abonné sous une forme individuelle (un seul dispositif électronique) ou sous une forme plurielle (une pluralité de dispositifs partageant un même identificateur i).

Selon un premier mode de réalisation préféré, l'invention s'appuie sur la notion mathématique de couplage dans des groupes d'ordre premier. Un tel couplage est une application bilinéaire généralement utilisée en cryptographie dans le domaine des courbes elliptiques notamment.

Soit $\beta$, un groupe bilinéaire

$$\beta = (p, \mathbb{G}_1, \mathbb{G}_2, \mathbb{G}_T, e(.,.))$$

d'ordre p premier tel que $|p| = \lambda$, $\lambda$ définissant la taille des éléments en tant que paramètre de sécurité. $\mathbb{G}_1$, $\mathbb{G}_2$ et $\mathbb{G}_T$ sont trois groupes cycliques d'ordre p et

$$e : \mathbb{G}_1 \times \mathbb{G}_2 \to \mathbb{G}_T$$

un couplage. Un groupe cyclique est un ensemble algébrique tel que $g^{p+1}$ est égal à g, p définissant l'ordre du groupe cyclique et g un élément du groupe que l'on nomme « générateur ». Au sens de l'invention, une relation particulière entre les groupes $\mathbb{G}_1$ et $\mathbb{G}_2$ n'est pas requise. Les deux groupes peuvent être identiques ou plus généralement, un isomorphisme $\Psi$ entre $\mathbb{G}_1$ et $\mathbb{G}_2$ peut être défini. L'invention prévoit que soient privilégiées tout éventuel isomorphisme ainsi que tout couplage efficacement calculables.

La valeur $SK_i$ est commune et partagée entre tous les dispositifs d'abonné. La valeur de $SK_i$ et égale à MK, ledit secret $SK_i = MK$ peut être élaboré comme l'indique à titre d'exemple la figure 8. Ainsi, un procédé 400 pour élaborer un tel secret peut consister à choisir aléatoirement 402 un générateur g du groupe $\mathbb{G}_1$ - comme l'indiquent la notation

$$g \xleftarrow{\ R\ } \mathbb{G}_1 \ .$$

En 403, un tel procédé choisit en outre et aléatoirement $\gamma_0$ appartenant à l'ensemble $\mathbb{Z}_p$ des entiers modulo $p$. Le secret $MK$ peut alors être défini 404 comme un ensemble de deux composantes respectivement égales à $g$ et $\gamma_0$ - nous utiliserons la notation $MK = (g,\gamma_0)$ pour décrire ceci. Ce procédé 400 peut être mis en oeuvre par un serveur de contenus tel que le serveur 3 décrit en liaison avec les figures 3 et 3a ou en variante par un serveur dédié, le secret $MK$ étant alors transmis audit serveur de contenus qui connait ainsi ledit secret préalablement élaboré.

Les moyens de traitement d'un serveur 3 tel que décrit en liaison avec les figures 3 et 3a, peuvent alors mettre en oeuvre un procédé pour encoder un contenu clair $M$ et produire pour un contenu encodé $C$. Un tel procédé peut être conforme à l'exemple du procédé 410 décrit en liaison avec la figure 7.

Ledit procédé comporte ainsi une étape 414 pour produire un contenu encodé $C$ à partir d'une crypto-période $cp$ et du secret $MK$ mémorisé par le serveur 3.

Il comporte en outre une étape (non représentée) pour produire une balise $t$ afin de caractériser la crypto-période $cp$ à partir de laquelle le contenu encodé $C$ a été produit. Enfin, il comporte une étape (non représentée) pour délivrer conjointement ledit contenu encodé $C$ et ladite balise $t$. Un tel procédé peut comporter en outre une étape préalable à l'émission de la balise $t$ pour associer à celle-ci des données attestant son intégrité.

Selon ce premier mode préféré de réalisation de l'invention, la fonction $enc$ pour produire le contenu encodé $C$ consiste à calculer 411 tout d'abord $\gamma_{cp} = F_0(\gamma_0,c_p)$, $F_0$ étant une fonction déterminée et connue du serveur 3. Le serveur 3 choisit 412 un ensemble $s = \left\{ s_j \right\}_{j=1}^{n}$ de $n$ valeurs appartenant chacune à $\mathbb{Z}_p$.

Il calcule 413 un mot $K = \left\{ K_j \right\}_{j=1}^{n}$ dont les $n$ composantes sont égales chacune à $K_j = e(g,f)^{\frac{1}{\gamma_{cp}+s_j}}$,

pour tout $j$ compris entre 1 et $n$, le générateur $f$ étant un générateur choisi aléatoirement du groupe $\mathbb{G}_2$, par exemple à l'étape 402 du procédé selon la figure 8 - comme l'indiquent la notation

$$f \xleftarrow{\ R\ } \mathbb{G}_2 \ .$$

Le serveur applique 414 une fonction $F3^{-1}$ audit mot $K$ et au contenu clair $M$ pour produire le contenu encodé $C$. Selon un exemple de réalisation, la fonction $F3^{-1}$ est le ou-exclusif. Les composantes du mot $K$ sont préalablement concaténées ou mélangées de manière déterminée.

Le procédé décrit en liaison avec la figure 7 peut comporter en outre une étape 413a pour élaborer l'entête $H$ pour permettre le décodage du contenu encodé. Cette variante est mise en oeuvre par un serveur 3 tel que décrit en liaison avec la figure 3, qui délivre l'entête $H$ conjointement au contenu encodé $C$ et la balise $t$.

Selon ce mode de réalisation, l'entête $H$ peut consister en un ensemble $H = \left\{ h_j \right\}_{j=1}^{n}$ de $n$ composantes respectivement égales à un couple de grandeurs $( f^{\frac{1}{\gamma_{cp}+s_j}} , s_j )$ pour tout $j$ compris entre 1 et $n$. L'ensemble $s = \left\{ s_j \right\}_{j=1}^{n}$ de $n$ valeurs est identique à l'ensemble $s$ utilisé pour élaborer le mot $K$ et $f$ est le générateur choisi - éventuellement aléatoirement - parmi le groupe $\mathbb{G}_2$ durant l'étape 402 pour élaborer le secret $MK$.

Pour mettre en oeuvre l'invention, il est nécessaire d'adapter en outre les dispositifs électroniques d'abonnés. Ainsi, la figure 5 permet de décrire un dispositif d'abonné conforme à l'invention. Un tel dispositif 1i comporte des moyens R pour recevoir du monde extérieur - par exemple d'un terminal 2i - une balise $t$.

Selon un mode de réalisation de l'invention, une balise $t$ peut comporter des données attestant son intégrité. A titre d'exemple, lesdites données peuvent consister en un code de redondance tel qu'un haché ou être élaboré à l'aide d'un secret *Kd* partagé entre le dispositif et le serveur. Selon une variante, une telle balise peut être transmise chiffrée depuis le serveur après avoir été élaborée par ce dernier à l'aide d'un algorithme de chiffrement symétrique ou asymétrique. Selon ces deux modes de réalisations, le dispositif 1i comporte des moyens de traitement 10 qui peuvent vérifier 11 l'intégrité de la balise reçue voire la déchiffrer. Si un secret *Kd* est nécessaire à cet usage, des moyens de mémorisation 21 peuvent être prévus au sein d'un dispositif 1i conforme à l'invention pour mémoriser ledit secret et coopérer avec les moyens de traitement. Pour produire 13 un mot de contrôle $k_{i,cp}$ propre au dispositif 1i, les moyens de traitements 10 coopèrent avec des moyens 22 pour mémoriser un identificateur *i* dédié au dispositif. Pour produire le mot de contrôle, les moyens de traitement 10 sont aptes à déduire 12 de la balise *t,* la crypto-période courante *cp.* Ils coopèrent en outre avec des moyens de mémorisation 23 qui mémorisent un secret $SK_i$. A partir de l'identificateur *i,* la crypto-période *cp* et du secret $SK_i$, les moyens de traitement du dispositif produisent 13 le mot de contrôle $k_{i,cp}$. Ce dernier est délivré par le dispositif 1i au mode extérieur (par exemple au terminal 2i) via des moyens pour délivrer S.

Pour produire un mot de contrôle, les moyens de traitement d'un dispositif 1i conforme à l'invention peuvent mettre en oeuvre un procédé 100 tel qu'illustré par la figure 5a.

Un tel procédé pour produire un mot de contrôle, comporte une première étape pour recevoir 101 une balise *t* via les moyens de réception R du dispositif 1i. Il comporte en outre une étape pour déterminer 103 la crypto-période courante *cp* en exploitant la balise *t* reçue puis une étape pour produire 105 un mot de contrôle $k_{i,cp}$ à partir de ladite crypto-période courante *cp,* de l'identificateur *i* dédié au dispositif et du secret $SK_i$ - *i* et $SK_i$ étant mémorisés par le dispositif. Le procédé comporte également une étape pour délivrer un mot de contrôle *k'* égal à $k_{i,cp}$ via les moyens pour délivrer S du dispositif.

Selon le premier mode de réalisation préféré s'appuyant sur le groupe bilinéaire

$$\beta = (p, \mathbb{G}_1, \mathbb{G}_2, \mathbb{G}_T, e(.,.))$$

d'ordre *p* premier, un dispositif d'abonné, mettant en oeuvre un procédé 100 tel qu'illustré en liaison avec la figure 5a, réceptionne 101 une balise *t* - éventuellement valide 102 son intégrité - puis déduit 103 la crypto-période courante *cp.* En 104, ledit dispositif met en oeuvre une fonction déterminée *F0* (identique à celle mise en oeuvre par le serveur de contenus) qui, appliquée à la composante $\gamma_0$ du secret $SK_i = MK$ et à la crypto-période *cp,* permet de générer $\gamma_{cp}$ qui appartient à $\mathbb{Z}_p$.

Le procédé 100 comporte alors une étape 105 pour élaborer le mot de contrôle $k_{i,cp}$. Cette étape consiste à calculer un couple de grandeurs $x_{i,cp}$ et $A_{i,cp}$. $x_{i,cp}$ appartient à $\mathbb{Z}_p$ et est calculé par les moyens de traitement du dispositif de manière déterministe à partir de l'identificateur *i* et de la crypto-période *cp.* $A_{i,cp}$ est calculé par le dispositif comme étant égal à $g^{\frac{1}{\gamma_{cp}+x_{i,cp}}}$.

Le dispositif 1i mettant en oeuvre un procédé 100 peut alors délivrer 106 au monde extérieur (tel qu'un terminal 2i avec lequel il coopère) un mot de contrôle *k'* égal à $k_{i,cp}$.

L'invention prévoit que, selon la variante décrite en liaison avec la figure 3a, un dispositif d'abonné conforme à l'invention puisse - en lieu et place du serveur de contenu 3 - produire et élaborer l'entête *H.* Le procédé 100 comporte alors une étape 105a pour élaborer les composantes dudit entête et une étape 106a pour délivrer au terminal avec lequel il coopère ledit entête. L'étape 105a est similaire à l'étape 413a décrite précédemment et mise en oeuvre par un serveur 3 selon la figures 3 et 7.

Ainsi l'étape 105a mise en oeuvre par un dispositif d'abonné, tel que décrit en liaison avec la figure 3a, peut consister à calculer un ensemble $H = \left\{ h_j \right\}_{j=1}^{n}$ de *n* composantes respectivement égales à un couple de grandeurs $(f^{\frac{1}{\gamma_{cp}+s_j}}, s_j)$ pour tout *j* compris entre 1 et *n*. Pour déterminer l'ensemble $s = \left\{ s_j \right\}_{j=1}^{n}$ de *n* valeurs identique à l'ensemble *s* utilisé pour élaborer le mot *K* par le serveur 3 (étape 413 de la figure 7) et pour choisir le générateur *f* parmi le groupe $\mathbb{G}_2$ (durant l'étape 402 en marge de l'élaboration du secret *MK),* l'invention prévoit que la balise *t* comporte des données caractérisant lesdits choix. En variante, lesdits ensemble $s = \left\{ s_j \right\}_{j=1}^n$ et générateur $f$ sont prédéterminés et partagés entre le serveur et l'ensemble des dispositifs d'abonnés.

Pour décoder un contenu encodé $C$, les moyens de traitement d'un terminal 2i tel que représenté en liaison avec les figures 3 ou 3a, coopèrent avec des moyens pour mémoriser les paramètres du groupe bilinéaire $\beta$. Ils mettent en oeuvre une fonction de décodage $dec$ - telle que celle décrite en liaison avec la figure 6 - pour produire un contenu clair $M$.

Un tel procédé 200 est mis en oeuvre par les moyens de traitement du terminal à la suite de la réception depuis le monde extérieur d'un contenu encodé $C$, d'un entête $H$ et d'un mot de contrôle $k_{i,cp}$. Il comporte une étape pour appliquer 201 une première fonction $F1$ à l'entête $H$ et au mot de contrôle $k_{i,cp}$ pour produire 203 un mot $K$. Le procédé 200 comporte en outre une étape pour appliquer 204 une deuxième fonction $F3$ audit mot $K$ et au contenu encodé $C$ pour produire le contenu clair $M$. Selon ce mode de réalisation, la fonction $F3^{-1}$, mise en oeuvre par le serveur pour encoder le contenu, est une fonction inverse de la fonction $F3$. Le terminal peut ainsi délivrer 205 ledit contenu clair $M$. Selon un mode de réalisation, les moyens de traitement du terminal peuvent mettre en oeuvre une fonction d'expansion $F2$ pour adapter le format du mot $K$ avant l'application de la fonction $F3$.

Ainsi, selon le premier mode de réalisation préféré de l'invention s'appuyant sur un groupe bilinéaire

$$\beta = (p, \mathbb{G}_1, \mathbb{G}_2, \mathbb{G}_T, e(.,.))$$

d'ordre $p$ premier, nous rappelons que le mot de contrôle $k_{i,cp}$ comporte deux composantes $x_{i,cp}$ et $A_{i,cp}$, $x_{i,cp}$ ayant été calculée directement à partir de l'identificateur $i$ du dispositif d'abonné qui a produit et délivré ledit mot de contrôle. Nous rappelons en outre que l'entête $H$ consiste en un ensemble de composantes $h_j$ respectivement égales à

$( f^{\frac{1}{\gamma cp + s_j}} , s_j )$ pour tout $j$ compris entre 1 et $n$. L'étape pour produire 203 le mot $K$ consiste dès lors à mettre en oeuvre une application bilinéaire

$$e \quad : \quad \mathbb{G}_1 \times \mathbb{G}_2 \to \mathbb{G}_T$$

pour laquelle $\mathbb{G}_1$, $\mathbb{G}_2$ et $\mathbb{G}_T$ sont trois groupes cycliques d'ordre premier $p$. Cette application bilinéaire porte sur les composantes de $H$ et de $k_{i,cp}$ telle que $K_j = e(A_{i,cp}, (f^{\frac{1}{\gamma cp + s_j}})^{x_{i,cp} - s_j} . f)$ pour tout $j = 1$ à $n$, $f$ étant le générateur appartenant au groupe cyclique $\mathbb{G}_2$ d'ordre $p$.

Par la mise en oeuvre de la propriété de bilinéarité,

$K_j = e(A_{i,cp}, (f^{\frac{1}{\gamma cp + s_j}})^{x_{i,cp} - s_j} . f) = e(g, f)^{\frac{1}{\gamma cp + s_j}}$. Nous pouvons constater que cette propriété permet de supprimer la contribution de la grandeur $x_{i,cp}$ qui dépend directement de l'identificateur $i$ dédié au dispositif d'abonné 1i qui a produit et délivré le mot de contrôle $k_{i,cp}$.

Pour produire le contenu clair $M$, l'étape 204 pour appliquer la fonction $F3$ auxdites composantes du mot $K$ et au contenu encodé $C$ consiste à appliquer la fonction $F3$ aux composantes préalablement agrégées 203 - concaténées ou mélangées d'une manière similaire à l'agrégation réalisée à l'étape 414 lors de l'encodage du contenu par le serveur. A titre d'exemple, la fonction $F3$ peut consister en le ou-exclusif - les fonctions $F3$ et $F3^{-1}$ étant alors identiques.

La mise en oeuvre éventuelle de la fonction d'expansion F2 - étape 202 - peut consister, selon l'exemple préféré de réalisation de l'invention, à adapter la taille des sorties de chaque application de la fonction $F1$ à une composante $K_j$ pour la rendre compatible avec l'application de la fonction $F3$ entre l'agrégation desdites composantes $K_j^*$ ainsi adaptées par $F2$ et le contenu encodé $C$.

L'invention prévoit un deuxième mode de réalisation préféré s'appuyant également sur la notion mathématique de couplage dans des groupes d'ordre premier. Selon ce deuxième mode de réalisation, la valeur du secret $SK_i$ mémorisé dans chaque dispositif d'abonné est distincte et dépend notamment de la valeur de l'identificateur $i$ de ce dernier.

Soit $\beta$, un groupe bilinéaire

$$\beta = (p, \mathbb{G}_1, \mathbb{G}_2, \mathbb{G}_T, e(.,.))$$

d'ordre $p$ premier tel que $|p| = \lambda$, $\lambda$ définissant la taille des éléments en tant que paramètre de sécurité. $\mathbb{G}_1$, $\mathbb{G}_2$ et $\mathbb{G}_T$ sont trois groupes cycliques d'ordre $p$ et

$$e : \mathbb{G}_1 \times \mathbb{G}_2 \rightarrow \mathbb{G}_T$$

un couplage. Une relation particulière entre les groupes $\mathbb{G}_1$ et $\mathbb{G}_2$ n'est pas requise. Les deux groupes peuvent être identiques ou plus généralement, un isomorphisme $\Psi$ entre $\mathbb{G}_1$ et $\mathbb{G}_2$ peut être défini. L'invention prévoit que soient privilégiées tout éventuel isomorphisme ainsi que tout couplage efficacement calculables.

La valeur du secret $MK$ connu du serveur peut consister à choisir aléatoirement deux générateurs $g$ et $f$ respectivement des groupes $\mathbb{G}_1$ et $\mathbb{G}_2$ - comme l'indiquent les notations

$$g \xleftarrow{R} \mathbb{G}_1$$

et

$$f \xleftarrow{R} \mathbb{G}_2 \, .$$

On choisit en outre et aléatoirement $\gamma$ appartenant à l'ensemble $\mathbb{Z}_p$ des entiers modulo $p$. Le secret $MK$ peut alors être défini comme un ensemble de trois composantes respectivement égales à $g$, $\gamma$ et $f$ - nous utiliserons la notation $MK = (g, \gamma, f)$ pour décrire ceci.

Pour générer un couple de secrets $SK_i$ et $DK_i$, destinés à être mémorisés respectivement dans le dispositif d'abonné 1i et dans le terminal 2i coopérant avec ce dernier, le serveur 3 peut mettre en oeuvre le procédé suivant. On choisit $x_i$ appartenant à $\mathbb{Z}_p$ et l'on calcule la grandeur $B_i = f^{\frac{1}{\gamma + x_i}}$. Un secret $SK_i$ peut être défini comme un ensemble de deux composantes respectivement égales à $x_i$ et $B_i$ - nous utiliserons la notation $SK_i = (x_i, B_i)$ pour décrire ceci. Un secret $DK_i$ est défini comme étant égal à $DK_i = g^{\frac{x_i}{\gamma + x_i}}$.

Les moyens de traitement d'un serveur 3 tel que celui décrit en liaison avec les figures 3 et 3a, peuvent alors mettre en oeuvre un procédé pour encoder un contenu clair $M$ et produire pour un contenu encodé $C$.

Un tel procédé peut comporter une étape pour produire un contenu encodé $C$ à partir d'une crypto-période $cp$ et du secret $MK$ connu ou mémorisé par le serveur 3.

Pour une crypto période $cp$, un tel procédé comporte en outre une étape pour produire une balise $t = t_{cp}$ afin de caractériser la crypto-période $cp$ à partir de laquelle le contenu encodé $C$ a été produit. A titre d'exemple, et selon le deuxième mode de réalisation préféré, ladite étape pour produire $t = t_{cp}$ consiste à choisir - éventuellement aléatoirement

- $y_{cp}$ parmi l'ensemble $\mathbb{Z}_p$ et générer une grandeur $f_{cp} = f^{\frac{1}{\gamma + y_{cp}}}$. La balise $t = t_{cp}$ consiste en un couple de deux gradeurs respectivement égales à $y_{cp}$ et $f_{cp}^{-1}$, telle que $t = t_{cp} = (y_{cp}, f_{cp}^{-1})$. Un tel procédé peut comporter en outre une étape préalable à l'émission de la balise $t$ pour associer à celle-ci des données attestant son intégrité.

La fonction *enc* pour produire le contenu encodé $C$ consiste à choisir tout d'abord - éventuellement aléatoirement - un ensemble $s = \left\{ s_j \right\}_{j=1}^{n}$ de $n$ valeurs appartenant chacune à $\mathbb{Z}_p$. On calcule ensuite un mot $K = \left\{ K_j \right\}_{j=1}^{n}$ dont les $n$ composantes sont respectivement égales à $K_j = e(g, f_{cp})^{s_j}$ pour tout $j$ compris entre 1 et $n$.

Le serveur applique une fonction $F3^{-1}$ audit mot $K$ et au contenu clair $M$ pour produire le contenu encodé $C$. Selon un exemple de réalisation, la fonction $F3^{-1}$ est le ou-exclusif. Les composantes du mot $K$ sont préalablement concaténées ou mélangées de manière déterminée.

Le procédé mis en oeuvre par le serveur peut comporter en outre une étape pour élaborer l'entête $H$ pour permettre *in fine* le décodage du contenu encodé par un terminal. Cette variante est mise en oeuvre par un serveur 3 tel que décrit en liaison avec la figure 3, qui délivre l'entête $H$ conjointement au contenu encodé $C$ et la balise $t$.

Selon ce mode de réalisation, l'entête $H$ peut consister en un ensemble $H = \left\{ h_j \right\}_{j=1}^{n}$ de $n$ composantes respectivement égales à un couple de grandeurs $(h_{j,1}, h_{j,2})$. Pour tout $j$ compris entre 1 et $n$, $h_{j,1} = g^{s_j \cdot \gamma}$ et $h_{j,2} = f_{cp}^{s_j}$, l'ensemble $s = \left\{ s_j \right\}_{j=1}^{n}$ de $n$ valeurs étant identique à l'ensemble utilisé pour élaborer le mot $K$.

Pour mettre en oeuvre l'invention selon ce deuxième mode de réalisation préféré, il est nécessaire d'adapter en outre les dispositifs électroniques d'abonnés. Un tel dispositif 1i - tel que décrit en liaison avec la figure 5 - comporte des moyens 23 pour mémoriser la valeur du secret $SK_i$ tel qu'élaboré par le serveur. Il comporte en outre des moyens 13 pour produire un mot de contrôle $k_{i,cp}$ conformément à un procédé qui, par exemple, comporte une première étape pour recevoir une balise $t$ via les moyens de réception R du dispositif 1i. Il comporte en outre une étape pour déterminer la crypto-période courante $cp$ en exploitant la balise $t = t_{cp}$ reçue puis une étape pour produire un mot de contrôle $k_{i,cp}$ à partir de ladite crypto-période courante $cp$, de l'identificateur $i$ dédié au dispositif et du secret $SK_i$ - $i$ et $SK_i$ étant mémorisés par le dispositif. Le procédé comporte également une étape pour délivrer un mot de contrôle $k'$ égal à $k_{i,cp}$ via les moyens pour délivrer S du dispositif.

Selon le deuxième mode de réalisation préféré s'appuyant sur le groupe bilinéaire

$$\beta = (p, \mathbb{G}_1, \mathbb{G}_2, \mathbb{G}_T, e(.,.))$$

d'ordre $p$ premier, un dispositif d'abonné 1i comporte un secret $SK_i = (x_i, B_i)$. La balise $t = t_{cp}$ reçue est égale à $t = t_{cp} = (y_{cp}, f_{cp}^{-1})$, $c_p$ étant la crypto-période courante.

Un procédé pour produire $k_{i,cp}$ consiste à calculer

$$k_{i,cp} = (B_i \cdot f_{cp}^{-1})^{\frac{1}{y_{cp} - x_i}} = \left( f^{\frac{1}{\gamma + x_i}} \cdot f^{\frac{-1}{\gamma + y_{cp}}} \right)^{\frac{1}{y_{cp} - x_i}} = f^{\frac{1}{(\gamma + y_{cp}) \cdot (\gamma + x_i)}} = f_{cp}^{\frac{1}{(\gamma + x_i)}}.$$

Le dispositif 1i mettant en oeuvre un tel procédé peut alors délivrer au monde extérieur (tel qu'un terminal 2i avec lequel il coopère) un mot de contrôle $k'$ égal à $k_{i,cp}$.

L'invention prévoit que, selon la variante décrite en liaison avec la figure 3a, un dispositif d'abonné conforme à l'invention puisse - en lieu et place du serveur de contenu 3 - produire et élaborer l'entête $H$ tel que défini précédemment.

Pour décoder un contenu encodé $C$, les moyens de traitement d'un terminal 2i tel que représenté en liaison avec les figures 3 ou 3a, mettent en oeuvre une fonction de décodage *dec* pour produire un contenu clair $M$. Un tel décodeur 2i comporte en outre des moyens pour mémoriser la valeur du secret $DK_i$ élaboré par le serveur ainsi que les paramètres du groupe bilinéaire $\beta$.

Un procédé mis en oeuvre par les moyens de traitement du terminal à la suite de la réception depuis le monde extérieur d'un contenu encodé $C$, d'un entête $H$ et d'un mot de contrôle $k_{i,cp}$, comporte une première étape pour produire un mot $K = \left\{ K_j \right\}_{j=1}^{n}$. Selon le deuxième mode de réalisation préféré, nous rappelons que l'entête $H$ élaboré par le serveur ou en variante par le dispositif d'abonné, consiste en un ensemble $H = \left\{ h_j \right\}_{j=1}^{n}$ de $n$ composantes respectivement égales à un couple de grandeurs $(h_{j,1}, h_{j,2})$.

Ainsi, l'étape pour produire le mot $K$ consiste, pour tout $j$ compris entre 1 et $n$, à élaborer

$$K_j = e\left( DK_i, h_{j,2} \right) . e\left( h_{j,1}, k_{i,cp} \right) = e\left( g^{\frac{x_i}{\gamma + x_i}}, f_{cp}^{s_j} \right) . e\left( g^{s_j \cdot \gamma}, f_{cp}^{\frac{1}{(\gamma + x_i)}} \right),$$

soit

$$K_j = e\left( g, f_{cp} \right)^{\frac{s_j \cdot x_i}{\gamma + x_i}} . e\left( g, f_{cp} \right)^{\frac{s_j \cdot \gamma}{\gamma + x_i}} = e\left( g, f_{cp} \right)^{s_j} .$$

Nous pouvons constater que la contribution de la grandeur $x_i$ - qui dépend directement de l'identificateur $i$ dédié au dispositif d'abonné 1i qui a produit et délivré le mot de contrôle $k_{i,cp}$ - est supprimée.

Pour produire le contenu clair $M$, le procédé comporte en outre une étape pour appliquer une fonction $F3$ au mot $K$ et au contenu encodé $C$. Cela revient à appliquer la fonction $F3$ aux composantes du mot $K = \left\{ K_j \right\}_{j=1}^{n}$ préalablement agrégées - concaténées ou mélangées d'une manière similaire à l'agrégation réalisée lors de l'encodage du contenu par le serveur. A titre d'exemple, la fonction $F3$ peut consister en le ou-exclusif - les fonctions $F3$ et $F3^{-1}$ étant alors identiques.

En liaison avec la figure 4, pour prévenir l'usage d'un mot de contrôle $k_{p,cp}$ - émis par un pirate - résultant d'un mélange basé sur un des mots de contrôle $k_{a,cp}$, $k_{b,cp}$ ou $k_{z,cp}$, l'invention prévoit un troisième mode de réalisation préféré qui s'appuie également sur la notion mathématique de couplage dans des groupes d'ordre premier.

Soit $\beta$, un groupe bilinéaire

$$\beta = (p, \mathbb{G}_1, \mathbb{G}_2, \mathbb{G}_T, e(.,.))$$

d'ordre $p$ premier tel que $|p| = \lambda$, $\lambda$ définissant la taille des éléments en tant que paramètre de sécurité. $\mathbb{G}_1$, $\mathbb{G}_2$ et $\mathbb{G}_T$ sont trois groupes cycliques d'ordre $p$ et

$$e : \mathbb{G}_1 \times \mathbb{G}_2 \to \mathbb{G}_T$$

un couplage. Une relation particulière entre les groupes $\mathbb{G}_1$ et $\mathbb{G}_2$ n'est pas requise. Les deux groupes peuvent être identiques ou plus généralement, un isomorphisme $\Psi$ entre $\mathbb{G}_1$ et $\mathbb{G}_2$ peut être défini. L'invention prévoit que soient privilégiées tout éventuel isomorphisme ainsi que tout couplage efficacement calculables. Selon ce troisième mode de réalisation, on définit en outre un paramètre $T$ qui détermine la taille maximale d'une coalition autorisée.

Comme pour le premier mode de réalisation préféré, chaque dispositif d'abonné mémorise un secret dont la valeur $SK_i = MK$ est commune et partagée entre un groupe de dispositifs d'abonné et est connue du serveur de contenus.

La valeur dudit secret *MK* peut consister à choisir éventuellement aléatoirement un générateur $g_0$ du groupe $\mathbb{G}_1$. On choisit en outre - éventuellement aléatoirement - $\gamma$ appartenant à l'ensemble $\mathbb{Z}_p$ des entiers modulo *p.* Le secret *MK* peut alors être défini comme un ensemble de deux composantes respectivement égales à $g_0$ et $\gamma$ - nous utiliserons la notation $MK = (g_0, \gamma)$ pour décrire ceci.

Les moyens de traitement d'un serveur 3, tel que décrit en liaison avec les figures 3 et 3a, peut alors mettre en oeuvre un procédé pour encoder un contenu clair *M* et produire pour un contenu encodé *C* à partir d'une crypto-période *cp* et du secret *MK* connu ou mémorisé par le serveur 3.

Pour une crypto-période *cp,* un tel procédé comporte une première étape pour produire une balise $t = t_{cp}$ afin de caractériser la crypto-période *cp* à partir de laquelle le contenu encodé *C* va être produit . Un tel procédé peut comporter en outre une étape préalable à l'émission de la balise *t* pour associer à celle-ci des données attestant son intégrité.

Pour produire un contenu *C*, le procédé comporte une étape pour appliquer une fonction déterminée $F_0$ au générateur $g_0$ et à la crypto-période *cp* pour produire $g_{cp} = F_0(g_0, cp)$ appartenant au groupe $\mathbb{G}_1$. Il comporte en outre une étape pour choisir - éventuellement aléatoirement - $r = \left\{ r_{j,l} \right\}_{\substack{j=1 \\ l=1}}^{\substack{j=n \\ l=T}}$ et $s = \left\{ s_j \right\}_{j=1}^{n}$ deux ensembles d'éléments de $\mathbb{Z}_p$.

Il comporte une étape pour calculer un mot $K = \left\{ K_j \right\}_{j=1}^{n}$ dont les *n* composantes sont respectivement égales à

$$K_j = e(g_{cp}, f)^{\frac{s_j}{(\gamma + r_{j,1}) \dots (\gamma + r_{j,T})}}$$

pour tout *j* compris entre 1 et *n, f* étant un générateur de $\mathbb{G}_2$.

Le serveur applique une fonction $F3^{-1}$ audit mot *K* et au contenu clair *M* pour produire le contenu encodé *C*. Selon un exemple de réalisation, la fonction $F3^{-1}$ est le ou-exclusif. Les composantes du mot *K* sont préalablement concaténées ou mélangées de manière déterminée.

Le procédé mis en oeuvre par le serveur peut comporter en outre une étape pour élaborer un entête *H* pour permettre *in fine* le décodage du contenu encodé par un terminal. Cette variante est mise en oeuvre par un serveur 3 tel que celui décrit en liaison avec la figure 3, qui délivre l'entête *H* conjointement au contenu encodé *C* et la balise *t.*

Selon ce mode de réalisation, l'entête *H* peut consister en un ensemble $H = \left\{ h_j \right\}_{j=1}^{n}$ de *n* composantes respectivement égales à un quadruplet de grandeurs $\left( \left\{ P_l \right\}_{l=1}^{T}, \left\{ r_{j,l} \right\}_{l=1}^{T}, g_{cp}^{\gamma \cdot s_j}, P_T^{s_j} \right)$. Pour tout *j* compris entre 1 et *n,*

$$P_1 = f^{\frac{1}{\gamma + r_{j,1}}}, \qquad P_2 = f^{\frac{1}{(\gamma + r_{j,1})(\gamma + r_{j,2})}}, \qquad \dots \qquad P_T = f^{\frac{1}{(\gamma + r_{j,1})(\gamma + r_{j,T})}},$$

l'ensemble $r = \left\{ r_{j,l} \right\}_{\substack{j=1 \\ l=1}}^{\substack{j=n \\ l=T}}$ étant identique à l'ensemble *r* utilisé pour élaborer le mot *K.* L'ensemble *s*, les générateurs $g_{cp}$ et *f* ainsi que *T* sont également identiques aux éléments utilisés pour élaborer le mot *K.*

Pour mettre en oeuvre l'invention selon ce troisième mode de réalisation préféré, il est nécessaire d'adapter en outre les dispositifs électroniques d'abonnés. Un tel dispositif 1i - tel que décrit en liaison avec la figure 5 - comporte des moyens 23 pour mémoriser la valeur du secret $SK_i = MK$ élaborée par le serveur ou simplement connue de celui-ci. Il comporte en outre des moyens 13 pour produire un mot de contrôle $k_{i,cp}$ conformément à un procédé qui, par exemple, comporte une première étape pour recevoir une balise *t* via les moyens de réception R du dispositif 1i. Il comporte en outre une étape pour déterminer la crypto-période courante *cp* en exploitant la balise $t = t_{cp}$ reçue puis une étape pour produire un mot de contrôle $k_{i,cp}$ à partir de ladite crypto-période courante $cp,$ de l'identificateur $i$ dédié au dispositif et du secret $SK_i$ - $i$ et $SK_i$ étant mémorisés par le dispositif d'abonné. Le procédé comporte également une étape pour délivrer un mot de contrôle $k'$ égal à $k_{i,cp}$ via les moyens pour délivrer S du dispositif.

Selon ce troisième mode de réalisation préféré s'appuyant sur le groupe bilinéaire

$$\beta = (p, \mathbb{G}_1, \mathbb{G}_2, \mathbb{G}_T, e(.,.))$$

d'ordre $p$ premier, un dispositif d'abonné 1i comporte un secret $SK_i = MK = (g_0, \gamma)$. La balise $t = t_{cp}$ reçue permet de caractériser et donc de déduire la crypto-période courante $cp.$

Un procédé pour produire $k_{i,cp}$ consiste tout d'abord à produire $g_{cp}$ en appliquant une fonction $F_0$ - identique à la fonction mise en oeuvre par le serveur - à $g_0$ et $cp$ telle que $g_{cp} = F_0(g_0, cp)$.

En outre, ledit procédé comporte une étape pour produire, de manière déterministe et connue du serveur - une grandeur $x_{i,cp}$, élément de $\mathbb{Z}_p$, qui dépend de l'identificateur $i$ du dispositif et de la crypto-période courante $cp.$ En variante, $x_{i,cp} = x_i$ est calculé pour dépendre l'identificateur $i$ mais non de $cp.$ L'étape pour produire le mot de contrôle traçable $k' = k_{i,cp}$ consiste à produire un triplet $k_{i,cp} = (x_{i,cp}, A_{i,cp}, B_{i,cp})$ pour lequel $A_{i,cp} = g_{cp}^{\frac{x_{i,cp}}{\gamma + x_{i,cp}}}$ et

$$B_{i,cp} = f^{\frac{1}{\gamma + x_{i,cp}}}.$$

Le dispositif 1i mettant en oeuvre un tel procédé peut alors délivrer au monde extérieur (tel qu'un terminal 2i avec lequel il coopère) un mot de contrôle $k'$ égal à $k_{i,cp}$.

L'invention prévoit que, selon la variante décrite en liaison avec la figure 3a, un dispositif d'abonné conforme à l'invention puisse - en lieu et place du serveur de contenu 3 - produire et élaborer l'entête $H$ tel que défini précédemment.

Pour décoder un contenu encodé $C,$ les moyens de traitement d'un terminal 2i tel que représenté en liaison avec les figures 3 ou 3a, mettent en oeuvre une fonction de décodage $dec$ pour produire un contenu clair $M.$ Un tel décodeur 2i comporte en outre des moyens pour mémoriser les paramètres du groupe bilinéaire $\beta.$

Un procédé mis en oeuvre par les moyens de traitement du terminal à la suite de la réception depuis le monde extérieur d'un contenu encodé $C,$ d'un entête $H$ et d'un mot de contrôle $k_{i,cp}$, comporte une première étape pour produire un mot $K = \left\{ K_j \right\}_{j=1}^{n}$. Selon ce troisième mode de réalisation préféré, nous rappelons que l'entête $H$ élaboré par le serveur ou en variante par le dispositif d'abonné, consiste en un ensemble $H = \left\{ h_j \right\}_{j=1}^{n}$ de $n$ composantes respectivement égales à un à un quadruplet de grandeurs $\left( \left\{ P_l \right\}_{l=1}^{T}, \left\{ r_{j,l} \right\}_{l=1}^{T}, g_{cp}^{\gamma.s_j}, P_T^{s_j} \right)$. Pour tout $j$ compris entre 1 et $n,$ $P_1 = f^{\frac{1}{\gamma + r_{j,1}}}$, $P_2 = f^{\frac{1}{(\gamma + r_{j,1})(\gamma + r_{j,2})}}$, $\cdots$ $P_T = f^{\frac{1}{(\gamma + r_{j,1})(\gamma + r_{j,T})}}$, l'ensemble $r = \left\{ r_{j,l} \right\}_{\substack{j=1 \\ l=1}}^{\substack{j=n \\ l=T}}$ appartenant à $\mathbb{Z}_p$. Nous rappelons en outre que le mot de contrôle $k_{i,cp}$ consiste en un triplet $k_{i,cp} = (x_{i,cp}, A_{i,cp}, B_{i,cp})$ pour lequel $A_{i,cp} = g_{cp}^{\frac{x_{i,cp}}{\gamma + x_{i,cp}}}$ et $B_{i,cp} = f^{\frac{1}{\gamma + x_{i,cp}}}$.

Ainsi, l'étape pour produire le mot $K$ consiste, pour tout $j$ compris entre 1 et $n,$ à élaborer

$$K_j = e\left(g_{cp}^{\gamma.s_j}, B_{i,cp}^{\overline{\frac{1}{\Pi_{l=1}^{T}(\gamma+r_{j,l})}}}\right).e\left(A_{i,cp}, P_T^{s_j}\right) \text{, soit :}$$

$$K_j = e(g_{cp}, f)^{\overline{\frac{s_j.\gamma}{(\gamma+x_{i,cp})\Pi_{l=1}^{T}(\gamma+r_{j,l})}}}.e(g_{cp}, f)^{\overline{\frac{s_j.x_{i,cp}}{(\gamma+x_{i,cp})\Pi_{l=1}^{T}(\gamma+r_{j,l})}}} = e(g_{cp}, f)^{\overline{\frac{s_j}{\Pi_{l=1}^{T}(\gamma+r_{j,l})}}}$$

avec $B_{i,cp}^{\overline{\frac{1}{\Pi_{l=1}^{T}(\gamma+r_{j,l})}}} = \left(B_{i,cp}.\prod_{l=1}^{T}P_l^{(-1)^{i+T.\Pi_{m=1}^{l-1}(x_{i,cp}-r_{j,m})}}\right)^{\overline{\frac{1}{\Pi_{l=1}^{T}(x_{i,cp}-r_{j,l})}}}.$

Nous pouvons constater que la contribution de la grandeur $x_{i,cp}$ - qui dépend directement de l'identificateur $i$ dédié au dispositif d'abonné 1i qui a produit et délivré le mot de contrôle $k_{i,cp}$ - n'apparait plus dans le mot $K$.

Pour produire le contenu clair $M$, le procédé comporte en outre une étape pour appliquer une fonction $F3$ au mot $K$ et au contenu encodé $C$. Cela revient à appliquer la fonction $F3$ aux composantes du mot $K = \{K_j\}_{j=1}^{n}$ préalablement agrégées - concaténées ou mélangées d'une manière similaire à l'agrégation réalisée lors de l'encodage du contenu par le serveur. A titre d'exemple, la fonction $F3$ peut consister en le ou-exclusif - les fonctions $F3$ et $F3^{-1}$ étant alors identiques.

Selon une variante, pour un $j$ donné, les éléments $\{r_{j,l}\}_{l=1}^{T}$ peuvent être calculés de manière déterministe à partir d'une graine, de sorte que seule cette graine ne soit transmise dans la composante $h_j$ de l'entête $H$. Ladite composante est alors de taille constante et indépendante de $T$. Ce paramètre $T$ peut être adapté au niveau de sécurité et à l'efficacité du système souhaités.

Que l'on choisisse l'un de trois modes de réalisation préférés précédemment décrits ou plus généralement un mode de réalisation conforme à l'invention, le système d'accès conditionnel ainsi constitué utilise des mots de contrôles $k_{i,cp}$ traçables, donc détectables par un opérateur. Un tel système prévient ainsi tout risque de *control-word sharing.*

Pour illustrer une méthode permettant de tracer un mot de contrôle $k_{i,cp}$ produit conformément à l'invention - quand bien même, le mot de contrôle $k_{p,cp}$ échangé par le pirate soit un mot mélangé ou résultant d'une collusion de plusieurs mots de contrôle $k_{a,cp}$, $k_{b,cp}$ ou $k_{z,cp}$ - considérons qu'un pirate délivre à un « abonné » indélicat un utilitaire de déchiffrement ou programme accompagné d'un mot de contrôle mélangé émis par un réseau pirate. Grâce à l'invention, il est possible de retrouver l'identité d'au moins un des dispositifs légitimes (ou traîtres) ayant servi à la fabrication dudit mot de contrôle mélangé. Cette capacité, appelée traçabilité, peut être réalisée au moyen d'une méthode générale dite de traçage en boîte blanche.

Selon cette méthode, le décodeur pirate est tout d'abord interprété comme une séquence d'instructions formelles, chaque instruction étant composée d'une opération, d'une ou plusieurs variables d'entrée et d'une variable de sortie. Parmi les opérations possibles, on distingue les opérations associées au système bilinéaire ($p, \mathbb{G}_1, \mathbb{G}_2, \mathbb{G}_T$), à savoir les opérations de multiplication et d'exponentiation dans chacun des groupes ($\mathbb{G}_1, \mathbb{G}_2, \mathbb{G}_T$), ainsi que l'opération de couplage bilinéaire. Ces opérations sont appelées « algébriques » tandis que toutes les autres seront qualifiées d'opérations « annexes ». Dans cette même phase d'interprétation, les variables d'entrée et de sortie de chaque instruction sont mises sous une forme dite SSA (*Static Single-Assignment,* selon une terminologie anglo-saxonne) de manière à pouvoir aisément déduire de cette représentation du décodeur pirate un graphe de calcul de toute variable manipulée par lui au cours de son exécution formelle. La variable de sortie du programme représente la donnée en clair $K$ et est issue d'un graphe de calcul à valeur de sortie dans $\mathbb{G}_T$. On limite le programme au calcul de ce graphe.

Dans une seconde étape dite de spécialisation, on cherche à fixer toutes les variables d'entrée du programme à des valeurs constantes pour lesquelles le programme parvient à déchiffrer correctement. Cette recherche de valeurs fixes peut être conduite de manière aléatoire et exhaustive et, si le décodeur donné à l'origine est suffisamment fonctionnel (c'est-à-dire déchiffre dans une fraction significative des cas en moyenne), cette étape de recherche peut aboutir rapidement en quelques essais. Lorsque des valeurs conviennent, elles sont substituées aux variables correspondantes dans le programme, de sorte que le nouveau programme obtenu est composé uniquement d'instructions effectuées sur des constantes. On procède alors à une étape de simplification du programme visant à obtenir une unique séquence d'instructions sans saut.

A cette fin, on effectue une propagation des constantes pour supprimer toutes les instructions annexes dont les variables d'entrée sont toutes des constantes ; cette transformation exclut donc les opérations algébriques. A l'issue de cette phase, on supprime les sauts non conditionnels en juxtaposant bout à bout les séquences linéaires d'instructions par ordre chronologique d'exécution. Le programme devient alors une suite d'instructions algébriques séquentielles sans flot de contrôle.

Dans une troisième phase, on applique au programme obtenu plusieurs transformations de simplifications algébriques de manière inductive et concurrente jusqu'à stabilisation du programme. Ces transformations visent à obtenir un programme équivalent dans lequel la sortie $K$ est calculée comme un produit de puissances entières de couplage à partir des données d'entrée, ces puissances étant des valeurs constantes du fait des phases de transformation précédentes. On identifie ensuite l'exposant correspondant à chaque élément algébrique du chiffré donné en entrée ainsi qu'à chaque élément du mot de contrôle mélangé donné en entrée. Du fait des propriétés mathématiques de l'invention, cet ensemble d'exposants, dont les valeurs sont connues, forme un système d'équations multivariées connu à l'avance dont les variables sont d'une part les éléments $x_1, x_2, ..., x_z \in \mathbb{Z}_p$ composant les mots de contrôle ayant servi à la fabrication du mot de contrôle mélangé, et d'autre part les paramètres choisis $s_1, s_2, ..., s_z \in \mathbb{Z}_p$ composant le

chiffré $C$ donné en entrée par le traceur. Le système d'équations multivariées dépend du mode de réalisation de l'invention.

Connaissant la valeur numérique des sorties du système et les paramètres choisis $\left\{ s_j \right\}_{j=1}^{z}$, le système peut être partiellement ou totalement inversé pour retrouver au moins l'un des éléments $x_1, x_2, ..., x_z$ composant l'un des mots de contrôle originels et ainsi identifier complètement l'un des dispositifs traîtres. Cette phase peut nécessiter d'avoir $z \leq B$ où $B$ est une borne qui dépend du mode de réalisation de l'invention.

L'invention prévoit également un mode de réalisation pour autoriser ou interdire un dispositif électronique d'abonné - conforme à l'invention - à produire un mot de contrôle $k' = k_{i,cp}$. L'invention prévoit ainsi qu'un tel dispositif ne puisse être autorisé à produire $k' = k_{i,cp}$ que si une date de mise à disposition ou une date d'initialisation est antérieure à la crypto-période courante. Ainsi et à titre d'exemple, lors de la souscription d'un abonnement, une date d'initialisation $cp^b$ peut être mémorisée dans le dispositif d'abonné délivré à un néo-abonné. Selon ce mode de réalisation, un dispositif d'abonné conforme à l'invention comporte des moyens 24 pour mémoriser une telle date. Celle-ci peut être exprimée comme étant égale à la crypto-période courante lors de la souscription. Ainsi, les moyens de traitement 10 d'un tel dispositif peuvent être adaptés pour coopérer avec lesdits moyens 24 et ne délivrer un mot de contrôle $k' = k_{i,cp}$ que si la crypto-période courante $cp$ est supérieure ou égale à $cp^b$. Ce mode de réalisation est illustré par les figures 5 et 5b. Selon cette dernière figure, le procédé 100, mis en oeuvre par les moyens de traitement 10 d'un dispositif d'abonné, comporte une étape 109 prévue à cet effet. En figure 5, un dispositif 1 comporte des moyens 14 et 15 pour comparer $cp^b$ et $cp$ et commander A la délivrance respective $k' = k_{i,cp}$ ou $k' = kf$, $kf$ étant une valeur distincte d'une valeur valide d'un mot de contrôle $k_{i,cp}$. Selon ces mêmes figures, l'invention prévoit qu'une ou plusieurs valeurs $kf$ puissent être mémorisées par le dispositif 1 - moyens de mémorisations 26. Les moyens S délivrent 106b un mot de contrôle $k' = kf$ en lieu et place de $k' = k_{i,cp}$ si $cp^b$ est supérieure à la crypto-période courante $cp$. Ce mode de réalisation prévient ainsi toute utilisation d'un dispositif d'abonné pour décoder un contenu encodé perçu antérieurement à la souscription d'abonnement. L'invention prévoit en complément ou en variante, l'utilisation d'une date d'expiration $cp^e$ qui peut être mémorisée dans tout dispositif d'abonné conforme à l'invention. Cette date est inscrite dans des moyens 25 d'un tel dispositif lors de la résiliation souhaitée ou forcée d'un abonnement. Ainsi, un procédé 100, décrit en liaison avec la figure 5b, peut comporter une étape 109 permettant de comparer la crypto-période courante $cp$ déduite de la balise et de ne délivrer 106 $k' = k_{i,cp}$ que si ladite crypto-période courante est inférieure à $cp^e$. Dans le cas contraire, le mot de contrôle délivré 106b par le dispositif peut être égal à $kf$ comme lors du traitement de la date d'initialisation.

Ce mode de réalisation peut être mis à profit pour éventuellement révoquer un dispositif traître en transmettant, via le réseau 4, une requête de révocation ciblée et mettre en échec l'utilisation dudit dispositif traître.

Selon ce mode de réalisation, le serveur de contenus élabore une balise $t = u\|v\|cp$ qui comporte, outre des données relatives à la crypto-période courante $cp$ - des composantes $u$ et $v$ de valeurs déterminées.

La composante $u$ permet d'indiquer une demande de révocation à destination d'un dispositif dont la valeur de l'identificateur $i$ est contenue dans la composante $v$. A réception d'une balise $t = u\|v\|cp$, les valeurs $u$, $v$ et $cp$ sont extraites par les moyens 12 du dispositif 1i selon la figure 5. En liaison avec la figure 5b, les moyens 14 comparent 107 la valeur de la composante $u$ avec une valeur prédéterminée $u_r$. Si $u = u_r$ et que $v = i$ (étape 110), les moyens de traitement du dispositif initialisent 111 une date d'expiration $cp^e$ égale à $cp$. Le dispositif d'abonné n'est plus en mesure de délivrer des mots de contrôle valides. Si la valeur de $v$ est différente de la valeur de l'identificateur $i$ du dispositif, ce dernier poursuit son traitement classique et produit un mot de contrôle valide.

L'invention prévoit une variante pour laquelle une requête en réhabilitation puisse être adressée à un dispositif d'abonné. Cette requête peut suivre une demande de révocation préalable ayant été adressée par erreur par exemple. L'objet d'une telle requête consiste à autoriser à nouveau un dispositif d'abonné à produire des mots de contrôle valides. De la même manière, l'invention prévoit une valeur prédéterminée $u_a$ caractéristique d'une telle requête. Pour annuler une révocation d'un dispositif, un serveur de contenus conforme à l'invention transmets une balise $t = u\|v\|cp$, pour laquelle $u$ et $v$ sont respectivement égales à $u_a$ et à l'identificateur $i$ du dispositif concerné par la requête.

A réception d'une balise $t = u\|v\|cp$, les valeurs $u$, $v$ et $cp$ sont extraites par les moyens 12 du dispositif. Les moyens 14 comparent 107 la valeur de la composante $u$ avec la valeur prédéterminée $u_a$. Si $u = u_a$ et que $v = i$ (étape 110), les moyens de traitement du dispositif réinitialisent 111 une date d'expiration $cp^e$ égale à $\varnothing$ - signifiant une absence d'expiration. Le dispositif d'abonné est à nouveau en mesure de délivrer de mots de contrôle valides. Si la valeur de $v$ est différente de la valeur de l'identificateur $i$ du dispositif, ce dernier poursuit son traitement classique ou demeure révoqué. Une telle requête en annulation de révocation ou en réhabilitation peut se traduire en variante par une requête en initialisation. Dans ce cas, il est possible d'initialiser la date d'initialisation $cp^b$ à la valeur courante de $cp$, la révocation se traduisant ainsi par la définition d'une date d'initialisation bien supérieure aux crypto-périodes courantes ou infinie.

Bien qu'étant illustré essentiellement en liaison avec le premier mode de réalisation préféré de l'invention - figure 5b - un tel procédé - pour révoquer ou réhabiliter un dispositif d'abonné - peut être mis en oeuvre quel que soit le mode de réalisation d'un système d'accès conditionnel conforme à l'invention.

## Revendications

1. Procédé (100) pour produire un mot de contrôle $k'$, ledit procédé étant mis en oeuvre par des moyens de traitement (10) d'un dispositif électronique d'abonné (1) coopérant avec un terminal (2i), ce dernier mettant en oeuvre un procédé (200) pour décoder un contenu encodé $C$ à partir dudit mot de contrôle $k'$ pour produire un contenu clair $M$, ledit dispositif électronique d'abonné (1) comportant des moyens de réception (R) pour recevoir des données depuis le terminal (2i) et des moyens (S) pour délivrer ledit mot de contrôle $k'$ audit terminal (2i), ledit procédé pour produire un mot de contrôle $k'$ comportant :

   - une étape pourrecevoir (101) des données via les moyens de réception (R) qui consistent en une balise $t$ ;
   - une étape pour déterminer (103) la crypto-période courante en exploitant la balise $t$ reçue ;
   - une étape pour produire (105) le mot de contrôle $k'$ à partir de ladite crypto-période courante $cp$ et d'un secret $SK_i$ mémorisé (23) par le dispositif ;
   - une étape pour délivrer ledit mot de contrôle $k'$ via les moyens pour délivrer (S) du dispositif ;

   le procédé étant **caractérisé en ce que** :

   - une valeur d'un identificateur $i$ dédié au dispositif électronique est préalablement mémorisée (22) par ledit dispositif électronique d'abonné, la valeur dudit identificateur $i$ étant distincte de celle mémorisée par tout autre dispositif d'abonné ;
   - ladite valeur de l'identificateur $i$ concourt au calcul dudit mot de contrôle $k'=k_{i,cp}$ de l'étape (105) pour produire ce dernier dont la valeur se trouve ainsi distincte de celle de tout autre mot de contrôle produit par un second dispositif électronique d'abonné pour la même crypto-période $cp$ ;

   et **en ce que** lesdits procédés pour respectivement produire (100) le mot de contrôle $k'=k_{i,cp}$ et pour décoder (200) le contenu encodé $C$, sont mutuellement agencés de sorte que ce dernier comporte une étape (201), duale à la production de $k'=k_{i,cp}$, pour supprimer la contribution de l'identificateur $i$ au sein du mot de contrôle $k'=k_{i,cp}$ et produire le contenu clair $M$.

2. Procédé selon la revendication précédente, **caractérisé en ce qu'**il comporte une étape préalable (140) pour enregistrer le secret $SK_i$ dans des moyens de mémorisation (23) du dispositif (1i).

3. Procédéselon les revendications 1 ou 2, **caractérisé en ce qu'**il comporte une étape préalable (109) pour autoriser le dispositif (1i) à produire (105) un mot de contrôle.

4. Procédéselon les revendications 1 ou 2, **caractérisé en ce qu'**il comporte une étape préalable (109) pour autoriser le dispositif (1) à délivrer (106) un mot de contrôle *k'* égal au mot de contrôle produit $k_{i,cp}$.

5. Procédéselon les revendications 3 ou 4, **caractérisé en ce que** l'étape (109) préalable pour autoriser le dispositif (1) consiste à comparer la crypto-période *cp* déduite de la balise *t* à une date d'activation ($cp^b$) mémorisée (24) dans ledit dispositif et à autoriser le dispositif si ladite crypto-période *cp* est supérieure à ladite date d'activation.

6. Procédéselon les revendications 3 ou 4, **caractérisé en ce que** l'étape (109) préalable pour autoriser le dispositif (1) consiste à comparer la crypto-période *cp* déduite de la balise *t* à une date d'expiration ($cp^e$) mémorisée (25) dans ledit dispositif et à autoriser le dispositif si ladite crypto-période *cp* est inférieure à ladite date d'expiration.

7. Procédéselon la revendication précédente, **caractérisé en ce qu'**il comporte une étape (111) pour écrire dans des moyens pour mémoriser (25) du dispositif une valeur de crypto-période préalablement déduite (103) de la balise *t*, en tant que date d'expiration ($cp^e$) si ladite balise *t* comporte une composante *u* dont la valeur ($u_r$) est caractéristique d'une demande de révocation et si ladite balise comporte en outre une composante *v* désignant l'identificateur *i* du dispositif.

8. Procédéselon les revendications 6 ou 7, **caractérisé en ce qu'**il comporte une étape (112) pour effacer dans des moyens pour mémoriser (25) une date d'expiration ($cp^e$) si ladite balise *t* comporte une composante *u* dont la valeur ($u_a$) est caractéristique d'une demande de réhabilitation et si ladite balise comporte en outre une composante désignant l'identificateur *i* du dispositif.

9. Dispositif électronique d'abonné (1i) coopérant avec un terminal (2i, 2a, ..., 2P), ledit dispositif comportant :

   - des moyens de réception (R) pour recevoir des données depuis le terminal (2) ;
   - des moyens de traitement (10) pour produire un mot de contrôle à partir desdites données ;
   - des moyens (S) pour délivrer ledit mot de contrôle audit terminal (2),

   **caractérisé en ce que** le dispositif comporte des moyens de mémorisation pour mémoriser un identificateur dédié *i* (22) dont la valeur est distincte de celle mémorisée par tout autre dispositif d'abonné, un secret $SK_i$ (23) et, **en ce que** lesdits moyens de traitement (10) et de mémorisation sont adaptés pour produire et délivrer un mot de contrôle traçable $k'=k_{i,cp}$ selon un procédé conforme à l'une quelconque des revendications 1 à 8.

10. Procédé (200) pour décoder un contenu encodé *C* et produire un contenu clair *M*, ledit procédé étant mis en oeuvre par des moyens de traitement d'un terminal (2i) coopérant avec des moyens pour recevoir des données depuis le monde extérieur (3, 4) et des moyens pour délivrer ledit contenu clair *M,* **caractérisé en ce que** lesdites données consistent en ledit contenu encodé *C,* un entête *H* et un mot de contrôle $k_{i,cp}$ produit conformément à l'une quelconque des revendications 1 à 8 par un dispositif électronique d'abonné (1i) pour lequel la valeur d'un identificateur dédié *i*, mémorisée par ledit dispositif électronique d'abonné et distincte de celle mémorisée par tout autre dispositif d'abonné, concourt au calcul du mot de contrôle $k_{i,cp}$ et **en ce que** le procédé (200) comporte :

    - une étape (201), duale à la production de $k'=k_{i,cp}$, pour appliquer une première fonction *F*1 à l'entête *H* et au mot de contrôle $k_{i,cp}$ pour supprimer la contribution dudit identificateur dédié *i* au sein de $k_{i,cp}$ et produire (203) un mot *K* indépendant dudit identificateur *i* ;
    - une étape pour appliquer (204) une deuxième fonction *F*3 audit mot *K* et au contenu encodé *C* pour produire le contenu clair *M* ;
    - une étape pour délivrer ledit contenu clair *M* via les moyens pour délivrer (205) du terminal.

11. Procédé selon la revendication précédente, **caractérisé en ce qu'**il comporte une étape pour appliquer (202) une troisième fonction *F*2 au mot *K* produit pour adapter le format dudit mot préalablement à l'application de la fonction *F*3 pour produire le contenu clair *M*.

12. Terminal électronique (2i) comportant :

    - des moyens de réception pour recevoir des données depuis le monde extérieur (3, 4) ;
    - des moyens de traitement (10) pour produire un contenu clair *M* à partir desdites données ;
    - des moyens pour délivrer ledit contenu clair à une interface homme-machine adaptée pour restituer ledit contenu clair (5) ;
    - des moyens pour coopérer avec un dispositif électronique d'abonné (1i),

**caractérisé en ce que** :

- les données reçues du mode extérieur consistent en un contenu encodé *C*, un entête *H* et une balise *t* ;
- les moyens pour coopérer avec ledit dispositif électronique d'abonné (1i) sont agencés pour transmettre à ce dernier ladite balise *t* et pour recevoir en retour, un mot de contrôle traçable $k_{i,cp}$ produit par ledit dispositif électronique d'abonné dont la valeur d'un identificateur dédié *i* concourt au calcul du mot de contrôle traçable $k_{i,cp}$, ladite valeur de l'identificateur dédié *i* étant mémorisée par ledit dispositif électronique d'abonné et distincte de celle mémorisée par tout autre dispositif électronique d'abonné ;
- le terminal comportedes moyens de traitement adaptés pour décoder et délivrer un contenu clair *M* selon un procédé conforme aux revendications 10ou 11.

13. Procédé (410) pour encoder un contenu clair *M* et produire un contenu encodé *C,* ledit procédé étant mis en oeuvre par des moyens de traitement d'un serveur (3) comportant des moyens pour délivrer ledit contenu encodé *C* à un terminal coopérant avec un dispositif électronique d'abonné, ledit procédé étant **caractérisé en ce qu'**il comporte :

   - une étape pour produire (414) un contenu encodé *C* à partir d'une crypto-période *cp* et d'un secret *MK* connu du serveur ;
   - une étape pour produire une balise *t* pour caractériser la crypto-période *cp* à partir de laquelle le contenu encodé *C* a été produit et, être exploitée par le dispositif électronique d'abonné pour lequel la valeur d'un identificateur dédié *i*, mémorisée par ledit dispositif électronique d'abonné et distincte de celle mémorisée par tout autre dispositif d'abonné, concourt à la production d'un mot de contrôle traçable $k_{i,cp}$ selon un procédé conforme à l'une quelconque des revendications 1 à 8 ;
   - une étape (413a) pour calculer et délivrer un entête *H* exploité par le terminal, ce dernier étant conforme à la revendication 12, pour supprimer la contribution de l'identificateur dédié *i* au sein de $k_{i,cp}$ et décoder le contenu encodé selon un procédé de décodage conforme aux revendications 10 ou 11 ;
   - une étape pour délivrer conjointement ledit contenu encodé *C,* l'entête *H* et ladite balise *t*.

14. Serveur (3) **caractérisé en ce qu'**il comporte des moyens de traitement agencés pour produire et délivrerau monde extérieur (4, 2) selon un procédé conforme à la revendication précédente :

   - un contenu encodé *C* à partir d'un contenu clair, d'une crypto-période *cp* et d'un secret *MK* ;
   - une balise *t* ;
   - un entête *H*.

15. Procédé (100) selon l'une quelconque des revendications 1 à 8, **caractérisé en ce qu'**il comporte en outre une étape pour élaborer (105a) et délivrer (106a) un entête *H* pour permettre au terminal de mettre en oeuvre un procédé de décodage (200) conforme aux revendications 10 ou 11.

16. Dispositif (1i) selon la revendication 9, **caractérisé en ce que** les moyens de traitement (10) sont adaptés pour produire et délivrer en outre un entête *H* selon un procédé conforme à la revendication précédente.

17. Système d'accès conditionnel à un contenu numérique, **caractérisé en ce qu'**il comporte un serveur (3), un terminal (2i) et un dispositif électronique (1i) respectivement conformes aux revendications 14, 12 et 9.

18. Système d'accès conditionnel à un contenu numérique, **caractérisé en ce qu'**il comporte un serveur (3) comportant des moyens de traitement pour produire une balise *t*, un contenu encodé *C* à partir d'un contenu clair *M,* d'une crypto-période *cp* et d'un secret *MK,* un terminal (2i) et un dispositif électronique (1i) respectivement conformes aux revendications 12, et 16.

19. Procédé pour tracer un mot de contrôle $k_{p,cp}$ produitpar un dispositif d'abonné traître, le procédé pour tracer étant **caractérisé :**

   - **en ce que** ledit dispositif électronique d'abonné est conforme respectivement aux revendication 9 ou 16 mettant en oeuvre un procédé (100) selon l'une quelconque des revendications 1 à 8 ou 15,pour lequel la valeur d'un identificateur dédié *i*, mémorisée par ledit dispositif électronique d'abonné et distincte de celle mémorisée par tout autre dispositif électronique d'abonné, concourt à la production du mot de contrôle $k_{i,cp}$ ;
   - et **en ce que** ledit procédé pour tracer comporte :

- une étape pour collecter un mot de contrôle $k_{p,cp}$ ;
- une étape pour collecter un utilitaire ou programme de déchiffrement pirate agencé pour décoder un contenu encodé à l'aide dudit mot de contrôle $k_{p,cp}$ ;
- une étape pour déterminer un identifiant $i=p$ d'un dispositif ayant produit $k_{p,cp}$ consistant à :

    i. interpréter l'utilitaire ou programme de déchiffrement pour concevoir un programme équivalent exprimant un ensemble d'instructions sous la forme d'opérations algébriques et annexes comportant chacune au moins une variable d'entrée et au moins une variable de sortie ;
    ii. fixer les variables d'entrée à des constantes pour lesquelles le programme équivalent décode le contenu encodé correctement ;
    iii. simplifier ledit programme équivalent pour que celui-ci ne comporte qu'une séquence d'instructions sans saut ;
    iv. convertir le programme équivalent simplifié en un système d'équations multivariées par la mise en oeuvre de transformations algébriques ;
    v. inverser tout ou partie ledit système d'équations multivariées pour identifier le dispositif traître.

**20.** Procédé d'accès conditionnel à un contenu numérique comportant :

- une étape (410) pour élaborer et délivrer par un serveur (3) un contenu encodé $C$, une balise $t$ et un entête $H$ conformément à la revendication 13 ;
- une étape pour réceptionner par un terminal (2i) lesdits contenu encodé $C$, balise $t$ et l'entête $H$ ;
- une étape pour transmettre la balise $t$ par le terminal à un dispositif (1i) coopérant avec ledit terminal ;
- une étape (100) pour produire et délivrer par ledit dispositif (1i) au terminal (2i) un mot de contrôle traçable $k_{i,cp}$ conformément à l'une quelconque des revendications 1 à 8 ;
- une étape pour décoder (200) par le terminal (2i) le contenu encodé $C$ et produire un contenu clair $M$ selon un procédé conforme aux revendications 10 ou 11 ;
- une étape pour restituer ledit contenu clair $M$ au moyen d'une interface (5) adaptée audit contenu clair.

**21.** Procédé d'accès conditionnel à un contenu numérique comportant :

- une étape (410) pour élaborer et délivrer par un serveur un contenu encodé $C$ et une balise $t$ caractérisant la crypto-période $cp$ à partir de laquelle le contenu encodé $C$ a été produit ;
- une étape pour réceptionner par un terminal (2i) lesdits contenu encodé $C$ et balise $t$ ;
- une étape pour transmettre la balise $t$ par le terminal à un dispositif (1i) coopérant avec ledit terminal ;
- une étape (100) pour produire et délivrer par ledit dispositif (1i) au terminal (2i) un mot de contrôle traçable $k_{i,cp}$ et un entête $H$ conformément au procédé selon la revendication 15 ;
- une étape pour décoder (200) par le terminal (2i) le contenu encodé $C$ et produire un contenu clair $M$ selon un procédé conforme aux revendications 10 ou 11 ;
- une étape pour restituer ledit contenu clair $M$ au moyen d'une interface (5) adaptée audit contenu clair.

**Patentansprüche**

**1.** Verfahren (100) zum Erzeugen eines Steuerworts $k'$, wobei das Verfahren durch Bearbeitungsmittel (10) einer elektronischen Teilnehmervorrichtung (1) umgesetzt wird, die mit einem Endgerät (2i) zusammenwirkt, wobei letzteres ein Verfahren (200) zum Entschlüsseln eines verschlüsselten Inhalts $C$ aus dem Steuerwort $k'$ umsetzt, um einen klaren Inhalt $M$ zu erzeugen, wobei die elektronische Teilnehmervorrichtung (1) Empfangsmittel (R) zum Empfangen der Daten aus dem Endgerät (2i), und Mittel (S) zum Abgeben des Steuerworts $k'$ an das Endgerät (2i) umfasst, wobei das Verfahren zum Erzeugen eines Steuerworts $k'$ umfasst:

- einen Schritt zum Empfangen (101) der Daten über die Empfangsmittel (R), die aus einer Markierung $t$ bestehen;
- einen Schritt zum Bestimmen (103) des aktuellen Krypto-Zeitraums durch Auswerten der empfangenen Markierung $t$;
- einen Schritt zum Erzeugen (105) des Steuerworts $k'$ aus dem aktuellen Krypto-Zeitraum $cp$ und einem Geheimnis $SK_i$, das durch die Vorrichtung gespeichert (23) wird;
- einen Schritt zum Abgeben des Steuerworts $k'$ über die Abgabemittel (S) der Vorrichtung;

wobei das Verfahren **dadurch gekennzeichnet ist, dass:**

- ein Wert einer Kennung $i$, der der elektronischen Vorrichtung gewidmet ist, zuvor von der elektronischen Teilnehmervorrichtung gespeichert (22) wird, wobei sich der Wert der Kennung $i$ von jenem unterscheidet, der von jeder anderen Teilnehmervorrichtung gespeichert wird;

- wobei der Wert der Kennung $i$ zur Berechnung des Steuerworts $k' = k_{i,cp}$ aus dem Schritt (105) beiträgt, um letzteres zu erzeugen, dessen Wert sich somit von jenem jedes anderen Steuerworts unterscheidet, das durch eine zweite elektronische Teilnehmervorrichtung für denselben Krypto-Zeitraum $cp$ erzeugt wird;

und dadurch, dass die Verfahren zum jeweiligen Erzeugen (100) des Steuerworts $k' = k_{i,cp}$ und zum Entschlüsseln (200) des verschlüsselten Inhalts $C$ wechselseitig derart angeordnet sind, dass letzteres einen zum Erzeugen von $k' = k_{i,cp}$ dualen Schritt (201) zum Löschen des Beitrags der Kennung $i$ innerhalb des Steuerworts $k' = k_{i,cp}$ und zum Erzeugen des klaren Inhalts $M$ umfasst.

2. Verfahren nach dem vorstehenden Anspruch, **dadurch gekennzeichnet, dass** es einen vorherigen Schritt (140) zum Speichern des Geheimnisses $SK_i$ in den Speichermitteln (23) der Vorrichtung (1i) umfasst.

3. Verfahren nach den Ansprüchen 1 oder 2, **dadurch gekennzeichnet, dass** es einen vorherigen Schritt (109) zur Freigabe der Vorrichtung (1i) umfasst, ein Steuerwort zu erzeugen (105).

4. Verfahren nach den Ansprüchen 1 oder 2, **dadurch gekennzeichnet, dass** es einen vorherigen Schritt (109) zur Freigabe der Vorrichtung (1i) umfasst, ein Steuerwort k' abzugeben, das gleich dem erzeugten Steuerwort $k_{i,cp}$ ist.

5. Verfahren nach den Ansprüchen 3 oder 4, **dadurch gekennzeichnet, dass** der vorherige Schritt (109) zur Freigabe der Vorrichtung (1) darin besteht, den aus der Markierung $t$ abgeleiteten Krypto-Zeitraum $cp$ mit einem in der Vorrichtung gespeicherten (24) Aktivierungsdatum ($cp^b$) zu vergleichen, und die Vorrichtung freizugeben, wenn der Krypto-Zeitraum $cp$ größer als das Aktivierungsdatum ist.

6. Verfahren nach den Ansprüchen 3 oder 4, **dadurch gekennzeichnet, dass** der vorherige Schritt (109) zur Freigabe der Vorrichtung (1) darin besteht, den aus der Markierung $t$ abgeleiteten Krypto-Zeitraum $cp$ mit einem in der Vorrichtung gespeicherten (25) Ablaufdatum ($cp^e$) zu vergleichen, und die Vorrichtung freizugeben, wenn der Krypto-Zeitraum $cp$ kleiner als das Ablaufdatum ist.

7. Verfahren nach dem vorstehenden Anspruch, **dadurch gekennzeichnet, dass** es einen Schritt (111) zum Schreiben in den Mitteln zum Speichern (25) der Vorrichtung eines zuvor aus der Markierung $t$ abgeleiteten (103) Werts für den Krypto-Zeitraum als Ablaufdatum ($cp^e$) umfasst, wenn die Markierung $t$ eine Komponente $u$ umfasst, deren Wert ($u_r$) kennzeichnend für einen Antrag auf Widerruf ist und die Markierung darüber hinaus eine Komponente v umfasst, die die Kennung $i$ der Vorrichtung bezeichnet.

8. Verfahren nach den Ansprüchen 6 oder 7, **dadurch gekennzeichnet, dass** es einen Schritt (112) zum Löschen in den Mitteln zum Speichern (25) eines Ablaufdatums($cp^e$) umfasst, wenn die Markierung $t$ eine Komponente $u$ umfasst, deren Wert ($u_a$) kennzeichnend für einen Antrag auf Wiederherstellung ist und die Markierung darüber hinaus eine Komponente umfasst, die die Kennung $i$ der Vorrichtung bezeichnet.

9. Elektronische Teilnehmervorrichtung (1i), die mit einem Endgerät (2i, 2a, ..., 2P) zusammenwirkt, wobei die Vorrichtung umfasst:

   - Empfangsmittel (R) zum Empfangen der Daten aus dem Endgerät (2);
   - Bearbeitungsmittel (10) zum Erzeugen eines Steuerworts aus den Daten;
   - Abgabemittel (S) für das Steuerwort an das Endgerät (2),

**dadurch gekennzeichnet, dass** die Vorrichtung Speichermittel zum Speichern einer gewidmeten Kennung $i$ (22) umfasst, deren Wert sich von jenem unterscheidet, der von jeder anderen Teilnehmervorrichtung gespeichert wird, ein Geheimnis $SK_i$ (23), und dadurch, dass die Mittel zur Bearbeitung (10) und zum Speichern angepasst sind, um ein nachvollziehbares Steuerwort $k' = k_{i,cp}$ nach einem Verfahren nach einem der Ansprüche 1 bis 8 zu erzeugen und abzugeben.

10. Verfahren (200) zum Entschlüsseln eines verschlüsselten Inhalts $C$ und zum Erzeugen eines klaren Inhalts $M$, wobei das Verfahren durch Bearbeitungsmittel eines Endgerätes (2i) umgesetzt wird, die mit Mitteln zum Empfangen der Daten aus der externen Welt (3, 4) Mitteln zum Abgeben des klaren Inhalts $M$ zusammenwirken, **dadurch gekenn-**

**zeichnet, dass** die Daten aus dem verschlüsselten Inhalt $C$, einem Kopf $H$ und einem Steuerwort $k_{i,cp}$ bestehen, das nach einem der Ansprüche 1 bis 8 durch eine elektronische Teilnehmervorrichtung (1i) erzeugt wurde, bei dem der Wert einer gewidmeten Kennung $i$, die durch die elektronische Teilnehmervorrichtung gespeichert wurde, und sich von jenem unterscheidet, der von jeder anderen Teilnehmervorrichtung gespeichert wurde, zur Berechnung des Steuerworts $k_{i,cp}$ beiträgt, und dadurch, dass das Verfahren (200) umfasst:

- einen dualen Schritt (201) zum Erzeugen von $k' = k_{i,cp}$ zur Anwendung einer ersten Funktion $F1$ auf den Kopf $H$ und auf das Steuerwort $k_{i,cp}$ zum Löschen des Beitrags der gewidmeten Kennung $i$ innerhalb von $k_{i,cp}$ und zum Erzeugen (203) eines von der Kennung $i$ unabhängigen Wortes $K$;
- einen Schritt zur Anwendung (204) einer zweiten Funktion $F3$ auf das Wort $K$ und auf den verschlüsselten Inhalt $C$ zum Erzeugen des klaren Inhalts $M$;
- einen Schritt zum Abgeben des klaren Inhalts $M$ über die Abgabemittel (205) des Endgeräts.

11. Verfahren nach dem vorstehenden Anspruch, **dadurch gekennzeichnet, dass** es einen Schritt zur Anwendung (202) einer dritten Funktion $F2$ auf das erzeugte Wort $K$ umfasst, um das Format des Wortes vor der Anwendung der Funktion F3 anzupassen, um den klaren Inhalt $M$ zu erzeugen.

12. Elektronisches Endgerät (2i), umfassend:

- Empfangsmittel zum Empfangen der Daten aus der externen Welt (3, 4);
- Bearbeitungsmittel (10) zum Erzeugen des klaren Inhalts $M$ aus den Daten;
- Mittel zum Abgeben des klaren Inhalts an eine Mensch-Maschinen-Schnittstelle, die sich dazu eignet, den klaren Inhalt (5) wiederherzustellen;
- Mittel zum Zusammenwirken mit der elektronischen Teilnehmervorrichtung (1i), **dadurch gekennzeichnet, dass**:
- die von der externen Welt empfangenen Daten aus einem verschlüsselten Inhalt $C$, einem Kopf $H$ und einer Markierung $t$ bestehen;
- die Mittel zum Zusammenwirken mit der elektronischen Teilnehmervorrichtung (1i) angeordnet sind, um letzterer die Markierung $t$ zu übertragen, und um als Rückmeldung ein nachvollziehbares Steuerwort $k_{i,cp}$ zu empfangen, das von der elektronischen Teilnehmervorrichtung erzeugt wurde, von der ein Wert einer gewidmeten Kennung $i$ zur Berechnung des nachvollziehbaren Steuerworts $k_{i,cp}$ beiträgt, wobei sich der Wert der gewidmeten Kennung $i$, der von der elektronischen Teilnehmervorrichtung gespeichert wurde, von jenem unterscheidet, der von jeder anderen elektronischen Teilnehmervorrichtung gespeichert wurde;
- das Endgerät Bearbeitungsmittel umfasst, die geeignet sind, um einen klaren Inhalt $M$ nach einem Verfahren nach den Ansprüchen 10 oder 11 zu entschlüsseln und abzugeben.

13. Verfahren (410) zum Verschlüsseln eines klaren Inhalts $M$ und zum Erzeugen eines verschlüsselten Inhalts $C$, wobei das Verfahren durch Bearbeitungsmittel eines Servers (3) umgesetzt wird, die Mittel zum Abgeben des verschlüsselten Inhalts $C$ an ein Endgerät umfassen, das mit einer elektronischen Teilnehmervorrichtung zusammenwirkt, wobei das Verfahren **dadurch gekennzeichnet, ist, dass** es umfasst:

- einen Schritt zum Erzeugen (414) eines verschlüsselten Inhalts $C$ aus einem Krypto-Zeitraum $cp$ und einem Geheimnis $MK$, das dem Server bekannt ist;
- einen Schritt zum Erzeugen einer Markierung t zur Kennzeichnung des Krypto-Zeitraums $cp$, aus der der verschlüsselte Inhalt $C$ erzeugt worden ist, und genutzt durch die elektronische Teilnehmervorrichtung, für die der Wert einer gewidmeten Kennung $i$, gespeichert durch die elektronische Teilnehmervorrichtung und unterschiedlich zu jenem, der von jeder anderen elektronischen Teilnehmervorrichtung gespeichert wird, zur Erzeugung eines nachvollziehbaren Steuerworts $k_{i,cp}$ nach einem der Ansprüche 1 bis 8 beiträgt;
- einen Schritt (413a) zum Berechnen und Abgeben eines Kopfes $H$, der von dem Endgerät genutzt wird, wobei letzterer dem Anspruch 12 entspricht, um den Beitrag der Kennung $i$ innerhalb von $k_{i,cp}$ zu löschen und den verschlüsselten Inhalt nach einem Entschlüsselungsverfahren nach den Ansprüchen 10 oder 11 zu entschlüsseln;
- einen Schritt zur gemeinsamen Abgabe des verschlüsselten Inhalts $C$, des Kopfes $H$ und der Markierung $t$.

14. Server (3), **dadurch gekennzeichnet, dass** er Bearbeitungsmittel umfasst, die angeordnet sind, um nach einem Verfahren nach dem vorstehenden Anspruch Folgendes zu erzeugen und an die externe Welt (4, 2) abzugeben:

- einen verschlüsselten Inhalt $C$ aus einem klaren Inhalt, einem Krypto-Zeitraum $cp$ und einem Geheimnis $MK$;

- eine Markierung *t*;
- einen Kopf *H*.

**15.** Verfahren nach einem der Ansprüche 1 bis 8, **dadurch gekennzeichnet, dass** es weiter einen Schritt zur Ausarbeitung (105a) und Abgabe (106a) eines Kopfs H umfasst, um es dem Endgerät zu erlauben, ein Entschlüsselungsverfahren (200) nach den Ansprüchen 10 oder 11 umzusetzen.

**16.** Vorrichtung (1i) nach Anspruch 9, **dadurch gekennzeichnet, dass** die Bearbeitungsmittel (10) geeignet sind, weiter einen Kopf *H* nach einem Verfahren nach dem vorstehenden Anspruch zu erzeugen und abzugeben.

**17.** System für den bedingten Zugriff auf einen digitalen Inhalt, **dadurch gekennzeichnet, dass** es einen Server (3), ein Endgerät (2i) und eine elektronische Vorrichtung (1i) jeweils nach den Ansprüchen 14, 12 und 9 umfasst.

**18.** System für den bedingten Zugriff auf einen digitalen Inhalt, **dadurch gekennzeichnet, dass** es einen Server (3) umfasst, der Bearbeitungsmittel zum Erzeugen einer Markierung *t*, eines verschlüsselten Inhalts *C* aus einem klaren Inhalt *M,* einem Krypto-Zeitraum *cp* und einem Geheimnis *MK* umfasst, ein Endgerät (2i) und eine elektronische Vorrichtung (1i) jeweils nach den Ansprüchen 12 und 16.

**19.** Verfahren zum Verfolgen eines Steuerworts $k_{p,cp}$, das von einer verräterischen Teilnehmervorrichtung erzeugt wurde, wobei das Verfahren zum Verfolgen **dadurch gekennzeichnet ist, dass**:

- die elektronische Teilnehmervorrichtung jeweils den Ansprüchen 9 oder 16 entspricht, die ein Verfahren (100) nach einem der Ansprüche 1 bis 8 oder 15 umsetzt, bei dem der Wert einer gewidmeten Kennung *i*, der von der elektronischen Teilnehmervorrichtung gespeichert ist und sich von jenem unterscheidet, der von jeder anderen elektronischen Teilnehmervorrichtung gespeichert wird, zur Erzeugung des Steuerworts $k_{i,cp}$ beiträgt;
- und dadurch, dass das Verfahren zum Verfolgen umfasst:

  - einen Schritt zum Sammeln eines Steuerworts $k_{p,cp}$;
  - einen Schritt zum Sammeln eines Piraten-Dienst- oder Entschlüsselungsprogramms, das angeordnet ist, um mithilfe des Steuerworts $k_{p,cp}$ einen verschlüsselten Inhalt zu entschlüsseln;
  - einen Schritt zum Bestimmen eines Benutzernamens *i* = *p* einer Vorrichtung, die $k_{p,cp}$ erzeugt hat, bestehend aus:

    i. Interpretieren des Dienstprogramms oder Entschlüsselungsprogramms, um ein äquivalentes Programm zu gestalten, das eine Reihe von Befehlen in Form von mathematischen Operationen und Anhängen zum Ausdruck bringt, die jeweils mindestens eine Eingangsvariable und mindestens eine Ausgangsvariable umfassen;
    ii. Fixieren der Eingangsvariablen auf Konstanten, deren verschlüsselten Inhalt das äquivalente Programm korrekt entschlüsselt;
    iii. Vereinfachen des äquivalenten Programms, damit dieses nur eine Befehlssequenz ohne Sprünge umfasst;
    iv. Umwandeln des vereinfachten äquivalenten Programms in ein System von multivariaten Gleichungen durch die Umsetzung von mathematischen Transformationen;
    v. Umkehren des gesamten Systems von multivariaten Gleichungen oder eines Teils davon, um die verräterische Vorrichtung zu identifizieren.

**20.** Verfahren für den bedingten Zugriff auf einen digitalen Inhalt, umfassend:

- einen Schritt (410) zum Ausarbeiten und Abgeben durch einen Server (3) eines verschlüsselten Inhalts *C,* einer Markierung *t,* und eines Kopfes *H* nach Anspruch 13;
- einen Schritt zum Empfangen durch ein Endgerät (2i) des verschlüsselten Inhalts *C,* der Markierung *t,* und des Kopfes *H;*
- einen Schritt zum Übertragen der Markierung *t* durch das Endgerät an eine Vorrichtung (1i), die mit dem Endgerät zusammenwirkt;
- einen Schritt (100 zum Erzeugen und Abgeben durch die Vorrichtung (1i) an das Endgerät (2i) eines nachvollziehbaren Steuerwortes $k_{i,cp}$ nach einem der Ansprüche 1 bis 8;
- einen Schritt zum Entschlüsseln (200) durch das Endgerät (2i) des verschlüsselten Inhalts C und zum Erzeugen eines klaren Inhalts *M* nach einem Verfahren nach den Ansprüchen 10 oder 11;

- einen Schritt zur Wiederherstellung des klaren Inhalts *M* anhand einer Schnittstelle (5), die für den klaren Inhalt geeignet ist.

21. Verfahren für den bedingten Zugriff auf einen digitalen Inhalt, umfassend:

- einen Schritt (410) zum Ausarbeiten und Abgeben durch einen Server eines verschlüsselten Inhalts *C* und einer Markierung *t*, den Krypto-Zeitraum *cp* kennzeichnend, aus dem der verschlüsselte Inhalt *C* erzeugt worden ist;
- einen Schritt zum Empfangen durch ein Endgerät (2i) des verschlüsselten Inhalts *C* und der Markierung *t*;
- einen Schritt zum Übertragen der Markierung *t* durch das Endgerät an eine Vorrichtung (1i), die mit dem Endgerät zusammenwirkt;
- einen Schritt (100) zur Erzeugung und Abgabe durch die Vorrichtung (1i) an das Endgerät (2i) eines nachvollziehbaren Steuerworts $k_{i,cp}$ und eines Kopfes *H* nach dem Verfahren nach Anspruch 15;
- einen Schritt zum Entschlüsseln (200) durch das Endgerät (2i) des verschlüsselten Inhalts *C* und zum Erzeugen eines klaren Inhalts *M* nach einem Verfahren nach den Ansprüchen 10 oder 11;
- einen Schritt zur Wiederherstellung des klaren Inhalts *M* anhand einer Schnittstelle (5), die für den klaren Inhalt geeignet ist.

**Claims**

1. A method (100) for producing a control word *k'*, said method being implemented by processing means (10) of a subscriber electronic device (1) cooperating with a terminal (2i), the latter implementing a method (200) for decoding an encoded content *C* on the basis of said control word *k'* in order to produce a clear content *M*, said subscriber electronic device (1) comprising receiving means (R) to receive data from the terminal (2i) and means (S) to deliver said control word *k'* to said terminal (2i), said method for producing a control word *k'* comprising:

- a step to receive (101) data via the receiving means (R) that consist in a tag *t*;
- a step to determine (103) the current crypto-period by using the tag *t* received;
- a step for producing (105) the control word *k'* on the basis of said current crypto-period *cp* and of a secret $SK_i$ stored (23) by the device;
- a step for delivering said control word *k'* via the means for delivering (S) the device; the method being **characterized in that**:
- a value of an identifier *i* dedicated to the electronic device is previously stored (22) by said subscriber electronic device, the value of said identifier *i* being distinct from that stored by any other subscriber device;
- said value of the identifier *i* contributes to the calculation of said control word $k' = k_{i,cp}$ of step (105) to produce the latter of which the value is thus distinct from that of any other control word produced by a second subscriber electronic device for the same crypto-period *cp*;

and **in that** said methods for producing (100) the control word $k' = k_{i,cp}$ and for decoding (200) the encoded content *C* respectively, are mutually arranged such that the latter comprises a step (201), dual to the production of control word $k' = k_{i,cp}$, to eliminate the contribution of the identifier *i* within the control word $k' = k_{i,cp}$ and produce the clear content *M*.

2. The method according to the preceding claim, **characterized in that** it comprises a prior step (140) to record the secret $SK_i$ in the storage means (23) of the device (1i).

3. The method according to claims 1 or 2, **characterized in that** it comprises a prior step (109) for enabling the device (1i) to produce (105) a control word.

4. The method according to claims 1 or 2, **characterized in that** it comprises a prior step (109) for enabling the device (1) to deliver (106) a control word *k'* that is the same as the control word produced $k_{i,cp}$.

5. The method according to claims 3 or 4, **characterized in that** the prior step (109) for enabling the device (1) involves comparing the crypto-period *cp* deduced from the tag *t* to an activation date ($cp^b$) stored (24) in said device and enabling the device if said crypto-period *cp* is greater than said activation date.

6. The method according to claims 3 or 4, **characterized in that** the prior step (109) for enabling the device (1) involves comparing the crypto-period $cp$ deduced from the tag $t$ to an expiry date ($cp^e$) stored (25) in said device and enabling the device if said crypto-period $cp$ is less than said expiry date.

7. The method according to the preceding claim, **characterized in that** it comprises a step (111) for writing in the storage means (25) of the device a previously deduced crypto-period value (103) of the tag $t,$ as the expiry date ($cp^e$) if said tag $t$ comprises a component $u$ of which the value ($u_r$) is characteristic of a revocation request and if said tag also comprises a component $v$ designating the identifier $i$ of the device.

8. The method according to claims 6 or 7, **characterized in that** it comprises a step (112) for deleting in the storage means (25) an expiry date ($cp^e$) if said tag $t$ comprises a component $u$ of which the value ($u_a$) is characteristic of a restoration request and if said tag also comprises a component designating the identifier $i$ of the device.

9. A subscriber electronic device (1i) cooperating with a terminal (2i, 2a, ..., 2P), said device comprising:

   - receiving means (R) for receiving data from the terminal (2);
   - processing means (10) for producing a control word on the basis of said data;
   - means (S) to deliver said control word to said terminal (2),

   **characterized in that** the device comprises storage means for storing a dedicated identifier $i$ (22) of which the value is distinctdistinct from that stored by any other subscriber device, a secret $Sk_i$ (23) and **in that** said processing (10) and storage means are adapted to produce and deliver a traceable control word $k = k_{i,cp}$ usingusing a method according to any of claims 1 to 8.

10. The method (200) for decoding an encoded content $C$ and producing a clear content $M,$ said method being implemented by processing means of a terminal (2i) cooperating with means for receiving data from the outside world (3, 4) and means for delivering said clear content $M,$ **characterized in that** said data consist in said encoded content $C,$ a header $H$ and a control word $k_{i,cp}$ produced according to any of claims 1 to 8 by a subscriber electronic device (1i) for which the value of a dedicated identifier $i$, stored by said subscriber electronic device and distinct from that stored by any other subscriber device, contributes to the calculation of the control word $k_{i,cp}$ and **in that** the method (200) comprises:

    - a step (201), dual to the production of $k' = k_{i,cp},$ for applying a first function $F1$ to the header $H$ and to the control word $k_{i,cp}$ for excluding the contribution of said dedicated identifier $i$ within $k_{i,cp}$ and for producing (203) a word $K$ independent of said identifier $i$;
    - a step for applying (204) a second function $F3$ to said word $K$ and to the encoded content $C$ for producing the clear content $M$;
    - a step for delivering said clear content $M$ via the means for delivering (205) the terminal.

11. The method according to the preceding claim, **characterized in that** it comprises a step for applying (202) a third function $F2$ to the word $K$ produced for adapting the format of said word prior to the application of the function $F3$ for producing the clear content $M.$

12. An electronic terminal (2i) comprising:

    - receiving means for receiving data from the outside world (3, 4);
    - processing means (10) for producing a clear content $M$ from said data;
    - means for delivering said clear content to a man/machine interface adapted for reproducing said clear content (5);
    - means for cooperating with a subscriber electronic device (1i),

    **characterized in that**:

    - the data received from the outside world consist in an encoded content $C,$ a header $H$ and a tag $t$;
    - the means for cooperating with said subscriber electronic device (1i) are arranged for transmitting to the latter said tag $t$ and for receiving in return a traceable control word $k_{i,cp}$ produced by said subscriber electronic device of which the value of a dedicated identifier $i$ contributes to the calculation of the traceable control word $k_{i,cp},$ said value of the dedicated identifier $i$ being stored by said subscriber electronic device and distinct from that stored by any other subscriber electronic device;

- the terminal comprises processing means for decoding and delivering a clear content $M$ using a method according to claims 10 or 11.

13. A method (410) for encoding a clear content $M$ and producing an encoded content $C$, said method being implemented by processing means of a server (3) comprising means for delivering said encoded content $C$ to a terminal cooperating with a subscriber electronic device, said method being **characterized in that** it comprises:

   - a step for producing (414) an encoded content $C$ from a crypto-period $cp$ and a known secret $MK$ of the server;
   - a step for producing a tag $t$ for characterizing the crypto-period $cp$ on the basis of which the encoded content $C$ has been produced and, being used by the subscriber electronic device for which the value of a dedicated identifier $i$, stored by said subscriber electronic device and distinct from that stored by any other subscriber device, contributes to the production of a traceable control word $k_{i,cp}$ using a method according to any of claims 1 to 8;
   - a step (413a) for calculating and delivering a header $H$ used by the terminal, the latter being according to claim 12, for excluding the contribution of the dedicated identifier $i$ within $k_{i,cp}$ and decoding the encoded content using a decoding method according to claim 10 or 11;
   - a step for simultaneously delivering said encoded content $C$, the header $H$ and said tag $t$.

14. A server (3) **characterized in that** it comprises processing means arranged for producing and delivering to the outside world (4, 2) using a method according to the preceding claim:

   - an encoded content $C$ on the basis of a clear content, a crypto-period $cp$ and a secret $MK$;
   - a tag $t$;
   - a header $H$.

15. A method (100) according to any of claims 1 to 8, **characterized in that** it also comprises a step for processing (105a) and delivering (106a) a header $H$ to enable the terminal to implement a decoding method (200) according to claim 10 or 11.

16. A device (1i) according to claim 9, **characterized in that** the processing means (10) are adapted for producing and delivering in addition a header $H$ using a method according to the preceding claim.

17. A conditional access system with a digital content, **characterized in that** it comprises a server (3), a terminal (2i) and an electronic device (1i) according to claims 14, 12 and 9 respectively.

18. A conditional access system with a digital content, **characterized in that** it comprises a server (3) comprising processing means for producing a tag $t$, an encoded content $C$ on the basis of a clear content $M$, of a crypto-period $cp$ and of a secret $MK$, a terminal (2i) and an electronic device (1i) according to claims 12 and 16 respectively.

19. A method for tracing a control word $k_{p,cp}$ produced by a traitor subscriber device, the method for tracing being **characterized:**

   - **in that** said subscriber electronic device is according to claim 9 or 16 respectively implementing a method according to any of claims 1 to 8 or 15, for which the value of a dedicated identifier $i$, stored by said subscribed electronic device and distinct from that stored by any other subscriber electronic device, contributes to the production of the control word $k_{i,cp}$;
   - and **in that** said method for tracing comprises:

      - a step for collecting a control word $k_{p,cp}$;
      - a step for collecting a utility or pirate decryption program arranged to decode an encoded content with the aid of a control word $k_{p,cp}$;
      - a step for determining an identifier $i = p$ of a device having produced $k_{p,cp}$ involving:

         i. interpreting the utility or decrypting program for creating an equivalent program expressing a set of instructions in the form of algebraic operations and annexes each comprising at least one input variable and at least one output variable;
         ii. fixing the input variables at constants for which the equivalent program correctly decodes the encoded content;

iii. simplifying said equivalent program so that it comprises only one jump-free sequence of instructions;

iv. converting the simplified equivalent program into a system of multivariate equations by implementing algebraic transformations;

v. reversing all or part of said system of multivariate equations to identify the traitor device.

**20.** An access method conditional upon a digital content comprising:

- a step (410) for processing and delivering by a server (3) an encoded content $C$, a tag $t$ and a header $H$ according to claim 13;
- a step for receiving by a terminal (2i) said encoded content $C$, tag $t$ and header $H$;
- a step for transmitting the tag $t$ by the terminal to a device (1i) cooperating with said terminal;
- a step (100) for producing and delivering by said device (1i) to the terminal (2i) a traceable control word $k_{i,cp}$ according to any of claims 1 to 8;
- a step for decoding (200) by the terminal (2i) the encoded content and producing a clear content $M$ using a method according to claim 10 or 11;
- a step for outputting said clear content $M$ by means of an interface (5) adapted to said clear content.

**21.** An access method conditional on a digital content comprising:

- a step (410) for processing and delivering by a server an encoded content $C$ and a tag $t$ characterizing the crypto-period $cp$ on the basis of which the encoded content $C$ has been produced;
- a step for receiving by a terminal (2i) said encoded content $C$ and tag $t$;
- a step for transmitting the tag $t$ by the terminal to a device (1i) cooperating with said terminal;
- a step (100) for producing and delivering by said device (1i) to the terminal (2i) a traceable control word $k_{i,cp}$ and a header $H$ using the method according to claim 15;
- a step for decoding (200) by the terminal (2i) the encoded content $C$ and producing a clear content $M$ using a method according to claim 10 or 11;
- a step for outputting said clear content $M$ by means of an interface (5) adapted to said clear content.

$$c = E(k)$$
$$C = enc(k, M)$$
$$k = D(c)$$
$$M = dec(k, C)$$

**FIG.1**

$$c = E(k)$$
$$C = enc(k, M)$$
$$k = D(c)$$
$$M = dec(k, C)$$

$$c_p = E_p(k)$$
$$k = D_p(c)$$
$$M = dec(k, C)$$

**FIG.2**

$$C = enc(M)$$
$$k_i = D(t,i)$$
$$M = dec(k_{i,cp}, C, H)$$

**FIG.3**

**FIG.3a**

$$C = enc(M)$$
$$k_{i,cp} = D(t,i)$$
$$M = dec(k_{p,cp}, C, H)$$

$$k_{p,cp} \approx k_{i,cp} \Rightarrow i$$

**FIG.4**

**FIG.5**

**FIG.6**

FIG.5a

FIG.5b

**FIG.8**

**FIG.7**

**FIG.9**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20080298582 A